(19)

Europäisches
Patentamt

European
Patent Office

Office européen
des brevets

(11) **EP 4 641 484 A1**

(12) **EUROPEAN PATENT APPLICATION**

(43) Date of publication:
**29.10.2025   Bulletin 2025/44**

(21) Application number: **25172273.2**

(22) Date of filing: **24.04.2025**

(51) International Patent Classification (IPC):
**G06T 5/60** *(2024.01)*        **G06T 5/70** *(2024.01)*
**G06T 15/06** *(2011.01)*

(52) Cooperative Patent Classification (CPC):
**G06T 5/60; G06T 5/70; G06T 15/06;**
G06T 2207/20016; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.04.2024  GB 202405827
26.03.2025  GB 202504419**

(71) Applicant: **Imagination Technologies Limited
Kings Langley, Hertfordshire WD4 8LZ (GB)**

(72) Inventors:
• **SALMI, Arturo Tommaso**
  **London (GB)**
• **CSÉFALVAY, Szabolcs**
  **Berkhamsted (GB)**
• **IMBER, James Stuart**
  **Hemel Hempstead (GB)**

(74) Representative: **Elkington and Fife LLP
Prospect House
8 Pembroke Road
Sevenoaks, Kent TN13 1XR (GB)**

(54) **RENDERING AN IMAGE OF A 3-D SCENE**

(57)     A method of rendering an image of a 3-D scene is provided. The method comprises: rendering (110) a noisy image at a first resolution; obtaining (112) one or more initial guide channels at the first resolution, and obtaining (140) one or more corresponding initial guide channels at a second resolution. The second resolution may be the same resolution as, or a higher resolution than, the first resolution. When the two resolutions are the same, the one or more initial guide channels at the first resolution and the one or more corresponding initial guide channels at the second resolution may be provided by a single set of initial guide channels. Enhanced guide channels are derived from the initial guide channels and the noisy image, using one or more machine learning models. For each of a plurality of local neighbourhoods, the method comprises: calculating (120) the parameters of a denoising model that approximates the noisy image (in the local neighbourhood) as a function of the one or more enhanced guide channels (at the first resolution), and applying (130, 150) the calculated parameters to the one or more enhanced guide channels (at the second resolution), to produce a denoised image at the second resolution.

To be accompanied, when published, by Figure 1 of the accompanying drawings.

EP 4 641 484 A1

FIGURE 1

**Description**

CROSS-REFERENCE TO RELATED APPLICATIONS

This application claims priority from UK patent application 2405827.3, filed on 25 April 2024, and UK patent application 2504419.9, filed on 26 March 2025, which are herein incorporated by reference in their entirety.

TECHNICAL FIELD

The present disclosure relates to 3-D graphics. In particular, it relates to denoising a rendered image of a 3-D scene.

BACKGROUND

Path-tracing is a Monte Carlo method for approximating the light transport in a scene. The quality of the result depends on the number of samples per pixel - the greater the number of samples, the better the result approximates the actual light transport.

However, increasing the number of samples is computationally expensive, especially since the standard deviation of the noise is related to the number of samples N by a factor $1/\sqrt{N}$. This means that four times as many samples are necessary to achieve a 50% reduction in noise. Consequently, increasing the number of samples quickly becomes impractical as a way to reduce the noise in the path-traced image.

It is known that applying denoising algorithms can reduce the noise without increasing the number of samples. A "guided filter" has been found to work well in this task. Originally proposed by He et al., the guided filter models each neighbourhood of a noisy image as an affine transform of a corresponding neighbourhood of a guide image. The guide image should be noise free and should contain scene structure (for example, object edges, occlusion boundaries or shadow edges) corresponding to the noisy image. Such guide images are available in the context of path-tracing, because the scene is synthetic and various "auxiliary" images of it can be rendered by other means. A guide image with several guide channels may be used in a guided filter, and each guide channel may contain different kinds of information useful for reconstructing a noise-free image (for example, a depth channel and surface normal channels). Different combinations of guide channels may be useful in different parts of the image; for this reason, the method is referred to as a local linear (or, more correctly but less commonly, a local affine) model.

Because it is guided by information about the structural content of the scene, the guided filter can denoise a noisy path-traced image of the scene without causing significant blurring across object edges within the image, provided suitable structural information is available in one or more of the guide channels.

It would be desirable to improve the quality of the denoising, and to implement it more efficiently, in order to better support path-tracing - in particular, to allow path-tracing to be performed at higher framerates and/or at better quality on devices with limited computational resources and power, such as mobile devices.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of rendering an image of a 3-D scene is provided. The method comprises: rendering a noisy image at a first resolution; obtaining one or more initial guide channels at the first resolution, and obtaining one or more corresponding initial guide channels at a second resolution. The second resolution may be the same resolution as, or a higher resolution than, the first resolution. When the two resolutions are the same, the one or more initial guide channels at the first resolution and the one or more corresponding initial guide channels at the second resolution may be provided by a single set of initial guide channels. Enhanced guide channels are derived from the initial guide channels and the noisy image, using one or more machine learning models. For each of a plurality of local neighbourhoods, the method comprises: calculating the parameters of a denoising model that approximates the noisy image (in the local neighbourhood) as a function of the one or more enhanced guide channels (at the first resolution), and applying the calculated parameters to the one or more enhanced guide channels (at the second resolution), to produce a denoised image at the second resolution.

According to a first aspect, there is provided a method of rendering an image of a 3-D scene, the method comprising:

rendering a noisy image;

obtaining one or more initial guide channels;

deriving one or more enhanced guide channels from the initial guide channels and the noisy image, using a first machine learning model;

for each of a plurality of local neighbourhoods, calculating the parameters of a denoising model that approximates the noisy image as a function of the one or more enhanced guide channels; and

applying the calculated parameters to the one or more enhanced guide channels, to produce a denoised image.

According to some examples, this approach can provide a combined rendering and denoising pipeline, suitable for efficient rendering of images that are at least partially produced using path-tracing. According to some examples, the approach of approximating the noisy image by means of such a function of one or more enhanced guide channels can be considered as a modified version of denoising by guided filtering. (In the original guided filter formulation, there was no step of deriving enhanced guide channels, for example.) The function may comprise or consist of a linear combination of the enhanced guide channels and a scalar offset. Thus, the denoising model may comprise, or may be, an affine model - in particular, a local affine model.

In some examples, the scalar offset may be incorporated in the denoising model by including an enhanced guide channel having a uniform value at every pixel - for example, an array of ones. Optionally, this enhanced guide channel is not stored in memory - it may be instantiated in software or hardware on the fly during fitting of the denoising model (for example, by the model fitting unit).

At least one of the enhanced guide channels may be different from every one of the initial guide channels (and the noisy image). That is, at least one of the enhanced guide channels may be a "new" guide channel, which was not present among the initial guide channels. In some examples, each of the enhanced guide channels is different from every one of the initial guide channels (and the noisy image). That is, none of the enhanced guide channels is present among the initial guide channels. (Or, in other words, none of the initial guide channels is present among the enhanced guide channels, and the noisy image is not present among the enhanced guide channels.) In other examples, the enhanced guide channels may include one or more of the initial guide channels and one or more "new" guide channels that were not present among the initial guide channels.

Each local neighbourhood may be a local neighbourhood centred on a respective pixel of the noisy image, whereby a different set of model parameters is calculated for each pixel. Within a given local neighbourhood, the contribution of each pixel to the calculation of the model parameters may be weighted such that pixels closer to a centre pixel of the local neighbourhood have a relatively greater influence than pixels further from the centre pixel. For example, each pixel could be weighted in inverse relation to its distance from the centre. In one example, a Gaussian function may be used to weight the contributions. In some examples, model parameters might not be calculated for every pixel of the noisy image. The calculated model parameters may have a lower resolution than the noisy image. In some examples, model parameters may be calculated and then downsampled to a resolution lower than that of the noisy image. Alternatively, downsampled (that is, lower resolution) model parameters may be calculated directly, without an explicit downsampling step. This can be achieved by calculating the model parameters only for a subset of pixels in the noisy image.

When the model parameters have a lower resolution than the noisy image, applying the calculated parameters to the one or more enhanced guide channels may comprise upsampling the calculated parameters (for example, using bilinear interpolation), and applying the upsampled calculated parameters to the one or more enhanced guide channels. The upsampled calculated parameters may comprise a set of model parameters for every output pixel location. Each output pixel location may correspond (one-to-one) to a respective pixel of the one or more enhanced guide channels. Applying the upsampled calculated parameters to the one or more enhanced guide channels may comprise (pixel-by-pixel) applying each set of model parameters to the respective pixel of the one or more full-resolution enhanced guide channels.

According to a second aspect, there is provided a method of rendering an image of a 3-D scene, the method comprising:

rendering a low-resolution noisy image;

obtaining one or more low-resolution initial guide channels and obtaining one or more corresponding full-resolution initial guide channels;

deriving one or more low-resolution enhanced guide channels from the low-resolution initial guide channels and the low-resolution noisy image, using a first machine learning model;

deriving one or more full-resolution enhanced guide channels from the full-resolution initial guide channels, using a second machine learning model;

for each of a plurality of local neighbourhoods, calculating the parameters of a denoising model that approximates the low-resolution noisy image as a function of the one or more low-resolution enhanced guide channels; and

applying the calculated parameters to the one or more full-resolution enhanced guide channels, to produce a denoised image.

In some examples, the method may further comprise obtaining a full-resolution noisy image corresponding to the low-resolution noisy image. The one or more full-resolution enhanced guide channels may be derived from the full-resolution initial guide channels and the full-resolution noisy image, using the second machine learning model. Obtaining the full-resolution noisy image may comprise upsampling the low-resolution noisy image. In other examples, the one or more full-resolution enhanced guide channels may be derived solely from the full-resolution initial guide channels.

The relative resolutions of the "low-resolution" and "full-resolution" images can be selected according to the needs of the application. In general, the "full-resolution" images have a resolution that is greater than or equal to the resolution of the "low-resolution" images (and therefore the "full-resolution" images have a larger number of pixels than, or the same number of pixels as, the "low-resolution" images). Nevertheless, in most examples, the "full-resolution" images have a higher resolution than the "low-resolution" images.

The method can enable a denoised full-resolution image to be produced from a low-resolution noisy image. This can be more computationally efficient and/or more efficient in terms of memory access bandwidth than performing a denoising operation on a full-resolution noisy image. When denoising based on a low-resolution image, there can be a reduction in the amount of data that must be retrieved from memory and processed. This is because a local neighbourhood of the low-resolution guide channels and the low-resolution noisy image will generally be smaller (that is, will contain fewer pixels) than the corresponding neighbourhood at full-resolution. In addition, a low-resolution noisy image can make more efficient use of a limited ray budget supported, for example, by ray tracing acceleration hardware in the GPU. For example, with height and width a quarter of the full-resolution height and width respectively, 16 times more rays can be traced for the same ray budget for each low-resolution pixel, allowing more "light bounces", lower initial noise, and better convergence towards the light transport of the scene. Finally, neural network inference at low resolution is considerably faster than neural network inference at high resolution. Nevertheless, there may also be advantages to processing a "full-resolution" noisy image. For example, this may avoid aliasing that could otherwise occur by under-sampling geometry when rasterising low-resolution guide images.

Each local neighbourhood may be a local neighbourhood centred on a respective pixel of the noisy low-resolution image, whereby a different set of model parameters is calculated for each pixel. Within a given local neighbourhood, the contribution of each pixel to the calculation of the model parameters may be weighted such that pixels closer to a centre pixel of the local neighbourhood have a relatively greater influence than pixels further from the centre pixel. For example, each pixel could be weighted in inverse relation to its distance from the centre. In one example, a Gaussian function may be used to weight the contributions. In some examples, model parameters might not be calculated for every pixel of the noisy low-resolution image. The calculated model parameters may have a lower resolution than the noisy low-resolution image. In some examples, model parameters may be calculated and then downsampled to a resolution lower than that of the noisy low-resolution image.

Applying the calculated parameters to the one or more full-resolution enhanced guide channels may comprise applying parameters that were calculated for pixels (in associated local neighbourhoods) of the low-resolution enhanced guide channel(s) to corresponding pixels of the full-resolution enhanced guide channel(s). Applying the calculated parameters to the one or more full-resolution enhanced guide channels may comprise upsampling the calculated parameters (for example, using bilinear interpolation), and applying the upsampled calculated parameters to the one or more full-resolution enhanced guide channels. The upsampled calculated parameters may comprise a set of model parameters for every output pixel location. Each output pixel location may correspond (one-to-one) to a respective pixel of the one or more full-resolution enhanced guide channels. Applying the upsampled calculated parameters to the one or more full-resolution enhanced guide channels may comprise (pixel-by-pixel) applying each set of model parameters to the respective pixel of the one or more full-resolution enhanced guide channels.

At least the first machine learning model may comprise a neural network. The neural network may receive as an input the initial guide channels (for example, the low-resolution initial guide channels) and the noisy image (for example, the low-resolution noisy image) and may generate as an output the enhanced guide channels (for example, the low-resolution enhanced guide channels).

The second machine learning model optionally also comprises a neural network. This neural network may receive as an input the full-resolution initial guide channels and may generate as an output the full-resolution enhanced guide channels. In some examples, the first and second machine learning models may comprise the same neural network. This may be a single neural network, configured to output both the low-resolution enhanced guide channels and the full-resolution enhanced guide channels. In other examples, the first and second machine learning models may comprise separate instances of the same neural network, having the same weights (optionally operating at two different resolutions). In still other examples, the first and second machine learning models may comprise different neural networks.

The method may further comprise, for each of the plurality of local neighbourhoods, inferring, using a machine learning model, one or more blurring parameters for the neighbourhood, wherein calculating the parameters of the denoising model optionally comprises: calculating a first outer product $(x^Tx)$ between pixels $(x)$ in the one or more enhanced guide channels and themselves; calculating a second outer product ($x^Ty$) between pixels (x) in the one or more enhanced guide channels and the corresponding pixels (y) in the noisy image; blurring the first outer products to calculate a first moment matrix ($X^TX$) for each local neighbourhood wherein said blurring is controlled by the one or more blurring parameters for the neighbourhood; blurring the second outer products to calculate a second moment matrix ($X^TY$) for each local neighbourhood wherein said blurring is controlled by the one or more blurring parameters for the neighbourhood; and calculating the parameters (A) of the denoising model for each local neighbourhood, comprising calculating an inverse matrix of the first moment matrix, and calculating a product of the inverse matrix and the second moment matrix.

According to another aspect, there is provided a method of rendering an image of a 3-D scene, the method comprising:

rendering a noisy image;
obtaining one or more guide channels;
for each of a plurality of local neighbourhoods,

inferring, using a machine learning model, one or more blurring parameters for the neighbourhood, and calculating the parameters of a denoising model that approximates the noisy image as a function of the one or more guide channels; and

applying the calculated parameters to the one or more guide channels, to produce a denoised image, wherein calculating the parameters of the denoising model comprises:

calculating a first outer product ($x^Tx$) between pixels (x) in the one or more guide channels and themselves; calculating a second outer product ($x^Ty$) between pixels (x) in the one or more guide channels and the corresponding pixels (y) in the noisy image; blurring the first outer products to calculate a first moment matrix ($X^TX$) for each local neighbourhood, wherein said blurring is controlled by the one or more blurring parameters for the neighbourhood; blurring the second outer products to calculate a second moment matrix ($X^TY$) for each local neighbourhood, wherein said blurring is controlled by the one or more blurring parameters for the neighbourhood; and calculating the parameters (A) of the denoising model for each local neighbourhood, comprising calculating an inverse matrix of the first moment matrix, and calculating a product of the inverse matrix and the second moment matrix.

According to another aspect, there is provided a method of rendering an image of a 3-D scene, the method comprising:

rendering a low-resolution noisy image;
obtaining one or more low-resolution guide channels and obtaining one or more corresponding full-resolution guide channels;
for each of a plurality of local neighbourhoods,

inferring, using a machine learning model, one or more blurring parameters for the neighbourhood, and calculating the parameters of a denoising model that approximates the low-resolution noisy image as a function of the one or more low-resolution guide channels; and

applying the calculated parameters to the one or more full-resolution guide channels, to produce a denoised image. wherein calculating the parameters of the denoising model comprises:

calculating a first outer product ($x^Tx$) between pixels (x) in the one or more low-resolution guide channels and themselves;
calculating a second outer product ($x^Ty$) between pixels (x) in the one or more low-resolution guide channels and the corresponding pixels (y) in the low-resolution noisy image; blurring the first outer products to calculate a first moment matrix ($X^TX$) for each local neighbourhood, wherein said blurring is controlled by the one or more blurring parameters for the neighbourhood; blurring the second outer products to calculate a second moment matrix ($X^TY$) for each local neighbourhood, wherein said blurring is controlled by the one or more blurring parameters for the neighbourhood; and calculating the parameters (A) of the denoising model for each local neighbourhood, comprising calculating an inverse matrix of the first moment matrix, and calculating a product of the inverse matrix and the second moment matrix.

Here, it should be understood that each pixel is represented by a row vector. Each pixel in the one or more (enhanced) guide channels is represented as a row vector x; each pixel in the noisy image is represented by a row vector y.

In some examples, calculating the parameters of the denoising model may comprise producing the first outer products and second outer products at a resolution lower than that of the noisy image (or noisy low resolution image) prior to the blurring operation. Producing the outer products at the lower resolution may comprise summing (or averaging) over blocks of the first outer products and summing (or averaging) over respective blocks of the second outer products. The blocks may be non-overlapping blocks of fixed size. The first outer products may consist of one first outer product matrix per block and the second outer products may consist of one second outer product matrix per block (instead of one outer product matrix per pixel of the noisy image, in each case).

"Blurring" refers to spatial averaging - for example, summing over the local neighbourhood, optionally using a weighted summation, optionally wherein a centre of the local neighbourhood is given greater weight in the summation than a periphery of the local neighbourhood.

Optionally, calculating the parameters of the denoising model comprises, before calculating the inverse matrix, adding a regularization matrix to the first moment matrix. The regularization matrix may comprise a diagonal matrix. The regularization matrix can help to avoid numerical instability in the matrix inverse.

Blurring the first outer products may comprise calculating a first multiscale pyramid from the first outer products and calculating the first moment matrix based on the first multiscale pyramid. Alternatively or additionally, blurring the second outer products may comprises calculating a second multiscale pyramid from the second outer products and calculating the second moment matrix based on the second multiscale pyramid.

The multiscale pyramid has a plurality of levels, wherein successive levels describe the outer products at successive different levels of detail. The multiscale pyramid may comprise or consist of a mipmap pyramid, for example. Mipmaps are amenable to efficient implementation, for example in fixed-function hardware of a graphics processing unit (GPU).

The blurred outer products (that is, the moment matrices) may be calculated directly from a predetermined level of the pyramid. In this case, the calculation of the pyramid may stop at this level. In other examples, the moment matrices may be calculated by interpolation using the pyramid. The interpolation may comprise bilinear or trilinear interpolation, or other sampling - for example bicubic sampling.

The blurring may comprise separable filtering in horizontal and vertical directions.

The filtering may use a centre-weighted filter function such as a Gaussian function. Optionally, the separable filtering may be applied to a predetermined level of the multiscale pyramid. This can facilitate an efficient implementation of centre-weighted filtering with reduced computational complexity (compared with filtering the outer products directly using the centre-weighted filter). This type of blurring may be applied to one or both of the first and second outer products.

The blurring may comprise filtering using an anisotropic 2-D filter.

By anisotropic, it is meant that the filter has a major axis and a minor axis perpendicular to the major axis, and extends further along the major axis than the minor axis. The axes may be aligned with the horizontal and vertical directions, or the axes may be independent of the horizontal and vertical directions.

The one or more initial guide channels may include surface normals of objects in the 3-D scene, and the blurring may comprise: for each local neighbourhood, determining a major axis and minor axis of a 2-D filter, based on the surface normal of the object at the centre of the neighbourhood; selecting a level of the multiscale pyramid, based on the length of the minor axis; and sampling the selected level of the multiscale pyramid along the major axis.

This can offer a computationally efficient way to adapt the blurring to the scene content - in particular, by adapting the blurring dependent on the orientation of the surface being sampled.

In some examples, the blurring may comprise IIR filtering.

In some examples, the blurring may comprise filtering with a running box filter.

The machine learning model used to infer the one or more blurring parameters for each local neighbourhood may also comprise a neural network. In some examples, the first and second machine learning models, and the machine learning model used to infer the blurring parameters, may comprise the same neural network. The blurring parameters may be inferred using a dedicated branch or head of that neural network.

Each neural network may be a convolutional neural network, optionally based on a U-net architecture. If the enhanced guide channels are derived using a U-net architecture, the blurring parameters may be inferred, by one or more additional convolutional layers, from hidden activations of a decoder portion of the U-net architecture.

The one or more blurring parameters may control a strength of blurring. For example, the one or more blurring parameters may control a width parameter of a filter kernel used for the blurring. The one or more blurring parameters may be inferred using the machine learning model from one or both of, the guide channels (optionally the initial or enhanced guide channels) and the noisy image.

The one or more blurring parameters may comprise two blurring parameters and the blurring may comprise separable filtering in two dimensions.

The blurring in each dimension may be controlled by a respective blurring parameter. For example, each of the two blurring parameters may control a width parameter of a filter in a respective dimension.

In some examples, the one or more blurring parameters may comprise three blurring parameters. This can enable anisotropic blurring with a controllable orientation. For example: a first blurring parameter may control a filter width parameter along a major axis of a filter kernel; a second blurring parameter may control a filter width parameter along a minor axis of the filter kernel; and a third blurring parameter may control an orientation of the filter kernel. (In this case, the filter kernel may be non-separable.)

The filter may be a centre-weighted filter (which gives greater weight to pixels in the centre of the neighbourhood). For example, the filter may be a Gaussian filter. The one or more blurring parameters may control a sigma parameter of the Gaussian filter.

In some examples, the one or more blurring parameters associated with each local neighbourhood may be normalised (for instance, in the range [0,1]). The normalised blurring parameters may then be scaled by a global parameter (which may be a single scalar value). The global parameter may be a predetermined constant. It may be set manually. Alternatively, it may be learned during the training of the machine learning model that produces the learning parameters.

The method may further comprise applying a tone-mapping function to the noisy image to compress its dynamic range, before deriving the one or more enhanced guide channels from the initial guide channels and the noisy image.

The one or more blurring parameters may be inferred based at least in part on the noisy image, the method optionally comprising applying a tone-mapping function to the noisy image to compress its dynamic range, before inferring the one or more blurring parameters.

The tone-mapping function may comprise a logarithmic function, for example. Alternatively or additionally to the use of the tone-mapping function, a loss function used to train each machine learning model may be configured to normalise pixel errors by a brightness of a respective pixel. (This applies, in particular, to the machine learning model used to infer the blurring parameters.)

The noisy image may be rendered in linear RGB space prior to applying the tone-mapping function.

The noisy image may be a noisy diffuse image containing illumination but not surface texture in the scene, and the denoised image may be a denoised diffuse image.

The enhanced guide channels may be diffuse guide channels (meaning guide channels that are used to denoise a diffuse illumination image).

In some examples, rendering the noisy diffuse image may comprise rendering it independently of scene texture information. In other examples, rendering the noisy diffuse image may comprise rendering a noisy image including scene texture information and dividing (pixel-wise) the rendered noisy image by an albedo image. The second approach can be considered as "demodulating" the rendered noisy image.

The method may further comprise: rendering a noisy specular image; obtaining one or more specular guide channels; for each of a plurality of local neighbourhoods, calculating parameters of a specular denoising model that approximates the noisy specular image as a function of the one or more specular guide channels; applying the calculated parameters of the specular denoising model to the one or more specular guide channels, to produce a denoised specular image; and combining the denoised specular image with the denoised diffuse image to produce a combined denoised image.

Here "specular guide channels" means guide channels that are used to denoise a specular illumination image.

Obtaining the specular guide channels may comprise deriving the specular guide channels from the initial guide channels and optionally the noisy image, using the first machine learning model.

The method may further comprise: rendering a low resolution noisy specular image; obtaining one or more low-resolution specular guide channels and obtaining one or more corresponding full-resolution specular guide channels; for each of a plurality of local neighbourhoods, calculating parameters of a specular denoising model that approximates the low-resolution noisy specular image as a function of the one or more low-resolution specular guide channels; applying the calculated parameters of the specular denoising model to the one or more full-resolution specular guide channels, to produce a denoised specular image; and combining the denoised specular image with the denoised diffuse image to produce a combined denoised image.

The plurality of local neighbourhoods may be same plurality of local neighbourhoods as those used to calculate the parameters of the denoising model mentioned previously above.

Obtaining the low-resolution specular guide channels may comprise deriving the low-resolution specular guide channels from the low-resolution initial guide channels and optionally the noisy image, using the first machine learning model, and obtaining the full-resolution specular guide channels may comprise deriving the full-resolution specular guide channels from the full-resolution initial guide channels and optionally the noisy image, using the second machine learning model.

Optionally, the first and second machine learning models may be the same machine learning model.

According to another aspect, there is provided a method of rendering an image of a 3-D scene, the method comprising:

rendering a noisy diffuse image;

rendering a noisy specular image;

obtaining one or more guide channels;

for each of a plurality of local neighbourhoods, calculating the parameters of a diffuse denoising model that approximates the noisy diffuse image as a function of the one or more guide channels;

for each of the plurality of local neighbourhoods, calculating the parameters of a specular denoising model that approximates the noisy specular image as a function of the one or more guide channels;

applying the calculated parameters of the diffuse denoising model to the one or more guide channels, to produce a denoised diffuse image;

applying the calculated parameters of the specular denoising model to the one or more guide channels, to produce a denoised specular image; and

combining the denoised specular image with the denoised diffuse image to produce a combined denoised image.

According to another aspect, there is provided a method of rendering an image of a 3-D scene, the method comprising:

rendering a low-resolution noisy diffuse image;

rendering a low-resolution noisy specular image;

obtaining one or more low-resolution guide channels and obtaining one or more corresponding full-resolution guide channels;

for each of a plurality of local neighbourhoods, calculating the parameters of a diffuse denoising model that approximates the low-resolution noisy diffuse image as a function of the one or more low-resolution guide channels;

for each of the plurality of local neighbourhoods, calculating the parameters of a specular denoising model that approximates the low-resolution noisy specular image as a function of the one or more low-resolution guide channels;

applying the calculated parameters of the diffuse denoising model to the one or more full-resolution guide channels, to produce a denoised diffuse image;

applying the calculated parameters of the specular denoising model to the one or more full-resolution guide channels, to produce a denoised specular image; and

combining the denoised specular image with the denoised diffuse image to produce a combined denoised image.

The noisy diffuse image may contain illumination but not surface texture information in the scene. The one or more guide channels may comprise one or more specular guide channels, which are used with the specular denoising model, and one or more diffuse guide channels, which are used with the diffuse denoising model.

Combining the denoised specular image with the denoised diffuse image may comprise multiplying the denoised diffused image (pixel-wise) by an albedo image and summing the result of the multiplying with the denoised specular image, to produce the combined denoised image.

The initial guide channels may comprise any one, or any combination of two or more, of: depth information of objects in the 3-D scene; information identifying materials of objects in the 3D scene; surface reflectances of objects in the 3-D scene; shadows in the 3-D scene; surface normals of objects in the 3-D scene; and a guide channel characterising a spatial dependency of incident light on global lighting over the surface of one or more 3-D models in the scene.

In some examples, the initial guide channels may contain information about scene structure in the 3-D scene, including but not limited to object boundaries, occlusion boundaries, and shadow edges. The initial guide channels may be essentially noise-free. They may be rendered by deterministic calculations (for example by rasterization), whereas the noisy image may be rendered by random sampling.

It should be noted that the use of at least one initial guide channel characterising the spatial dependency of incident light on global lighting (such as an ambient occlusion guide, as defined below) is contrary to the way that ambient occlusion information might conventionally be expected to be used. A more conventional approach might include incorporating ambient occlusion in the noisy image. Alternatively, ambient occlusion data might be combined with the denoised image, at the end of the rendering pipeline. It will be noted that, in examples of the present method, no external ambient occlusion information is incorporated in the noisy image, and the denoised image is not combined with any ambient occlusion information. Ambient occlusion information is only introduced into the pipeline by said at least one initial guide channel.

Obtaining said at least one initial guide channel may comprise: obtaining precomputed texture data containing information about shadowing; and projecting the precomputed texture data into screen space to produce said at least one initial guide channel. The precomputed texture data may be provided in texture space. During the rendering process, the precomputed texture data is projected into (or rendered in) screen space.

Rendering the noisy image may comprise rendering by path tracing.

(For the avoidance of doubt: references to the "noisy image" are intended to encompass the "low-resolution noisy image"; and references to the "denoised image" encompass the "full-resolution denoised image".)

In this case, the method can be seen as denoising a path-traced image by means of guided filtering. Path-tracing is computationally intensive, because of the need to cast multiple rays per pixel, potentially with multiple "bounces" per ray. Some examples of the present method can avoid the need to render a full-resolution path-traced image. The inventors have found that comparable results can be achieved more efficiently by using low-resolution images and investing computational effort in the number of rays per pixel and/or number of bounces per ray, rather than rendering a larger number of pixels. In other words, the computational effort is better invested in producing a less noisy low-resolution image and/or a closer approximation to the light transport, rather than producing a noisier or more approximate full-resolution image.

The noisy image may comprise indirect lighting in the scene. Optionally, the noisy image consists solely of indirect lighting. Here, "direct" lighting refers to rays that interact (intersect) with a single object before arriving at the virtual camera / observer. This means that the light ray travels directly from a light source to the object (or, equivalently, is traced from the object to the light source) and then travels directly from the object to the virtual camera. The object is therefore lit "directly" by the light source. In contrast, "indirect" lighting refers to light rays that have interacted (intersected) with at least two objects between the light source and the virtual camera. For example, a light ray may be reflected by a first object toward a second object, and may be reflected by the second object toward the virtual camera. In examples according to the present disclosure, for diffuse light, a direct lighting image does not incorporate any information about the surface reflectance of the objects in the scene. An indirect lighting image does not incorporate any information about the surface reflectance of the final object "nearest" the virtual camera - meaning the final surface that a light ray interacts with on its path from the light source to the camera. However, in general, an indirect lighting image does incorporate information about the colour of the surfaces "closer" to (i.e. previously encountered in a path from) the light source, since the interaction of the light ray with these coloured surfaces will influence the colour of the indirect illumination falling on the "nearest" object. The direct lighting and indirect lighting may be combined before or after the denoising. A direct lighting image may be modelled using ray tracing, for example. It will typically be low noise or noise free. Indirect lighting will typically be noisier than direct lighting.

The method may further comprise: obtaining a direct lighting image; and combining the denoised image with the direct lighting image to produce a global illumination image. The combining may comprise summing the denoised image and the direct lighting image. In this example, the direct lighting image is combined with the indirect lighting image after denoising.

In some examples, obtaining the direct lighting image may comprise rendering it by ray-tracing or rendering it by rasterization. In said ray-tracing, each ray may be cast along a path with exactly one bounce. Rendering the direct lighting image by rasterization may comprise rendering with shadow mapping.

The noisy image may be a noisy global illumination image, comprising direct and indirect lighting in the scene, whereby the denoised image is a denoised global illumination image.

Rendering the noisy global illumination image may comprise combining (for example, summing) a noisy indirect lighting image and a direct lighting image. In this example, the direct lighting image is combined with the indirect lighting image before denoising. Alternatively, a noisy global illumination image may be rendered directly by path tracing simulating direct and indirect lighting.

The method may further comprise combining the global illumination image or the denoised global illumination image with a surface reflectance image to produce a rendered image of the 3-D scene. The combining may comprise multiplying the global illumination by the surface reflectance. The surface reflectance image may comprise or consist of albedo. The surface reflectance image may be rendered by rasterization.

The initial guide channels may be rendered by ray-casting or rasterization (in any combination).

Obtaining the one or more initial guide channels (including obtaining low-resolution and full-resolution initial guide channels) optionally comprises rendering by rasterization.

For example, the low-resolution initial guide channel(s) may be rendered by rasterization, and the high-resolution initial guide channel(s) may be rendered by ray-casting or rasterization. Alternatively, the high-resolution initial guide channel(s) may be rendered by rasterization and the low-resolution initial guide channel(s) may be rendered by ray-casting or rasterization.

Optionally: the low-resolution initial guide channels may be obtained by rendering at low resolution by a first rasterization pass; and the full-resolution initial guide channels may be obtained by rendering at full resolution by a second rasterization pass.

That is, the low-resolution and full-resolution initial guide channels may be rendered separately. Alternatively, the low-resolution initial guide channels may be generated from the full-resolution initial guide channels by down-sampling. However, the inventors have found that it may be more efficient to render initial guide channels twice, at different resolutions, rather than render them once at full resolution and downsample them. This is because memory access bandwidth can be reduced by rendering the initial guide channels twice. Rather than writing/reading the initial guide channels to/from memory, they can be rendered at the desired resolution as needed by the algorithm.

A single rasterization pass may have several outputs. Therefore, multiple initial guide channels (and optionally all of the initial guide channels) may be generated by a single rasterization pass.

The low-resolution initial guide channels and full-resolution initial guide channels may comprise any one or any combination of two or more of: depth information of objects in the 3-D scene; information identifying materials of objects in the 3-D scene; surface reflectances of objects in the 3-D scene; shadows in the 3-D scene; surface normals of objects in the 3-D scene; and a guide channel characterising a spatial dependency of incident light on global lighting over the surface of one or more 3-D models in the scene.

Also provided is a method of training a machine learning model to derive one or more enhanced guide channels from one or more initial guide channels, wherein the enhanced guide channels are suitable for use in a method of rendering an image of a 3D scene, the method comprising:

obtaining a training dataset comprising a plurality of noisy training images and a plurality of reference training images, each reference training image corresponding to a respective noisy training image;

obtaining, for each noisy training image, one or more initial guide channels;

defining a machine learning model that derives one or more enhanced guide channels from the one or more initial guide channels and the noisy image;

defining a denoising algorithm that produces a denoised image from a respective noisy training image;

defining a loss function, based on a comparison between the denoised image and the respective reference training image; and

training the machine learning model to derive the one or more enhanced guide channels from the one or more initial guide channels and the noisy image such that the loss function is minimised.

In this way, the machine learning model may be trained such that an error is minimised between each denoised image and the respective reference training image. That is, the machine learning model may be trained to minimize a loss function that measures the difference between the denoised image and the respective reference image.

The denoising algorithm may produce the denoised image by approximating the noisy training image as a function of the one or more enhanced guide channels in each of a plurality of local neighbourhoods.

Each noisy training image may be rendered by path tracing with a first number of samples. Each reference training image may be a low-noise training image rendered by path tracing with a second number of samples, wherein the second number of samples is greater than the first number of samples. In this way, training images that are path traced with a large number of samples can be used as ground truth in the training of the machine learning algorithm.

The machine learning model may comprise a neural network and the training may comprise a back-propagation algorithm. The denoising algorithm may be differentiable, so as to support the use of back-propagation.

The neural network may have been optimised for inference by training to reduce bit depths and/or to remove redundant channels. For example, the neural network may be a self-compressing neural network.

The denoising algorithm optionally comprises a guided filter.

The loss function may be based on comparing pixels of the denoised image with respective pixels of the reference training image, to produce pixelwise error values. The contribution of each error value to the loss function may be normalised by the brightness of the respective pixel in the reference training image.

Comparing the pixels of the denoised image with respective pixels of the reference training image may comprise calculating an absolute difference between the pixel values. The loss function may be based on an L1 metric. Such a loss function may be based on a sum of (normalised) absolute differences.

The denoising algorithm may comprise a denoising model that approximates the noisy image as a function of the one or more enhanced guide channels, and calculating parameters of the denoising model may comprise: calculating a first outer product ($x^T x$) between each pixel ($x$) in the one or more enhanced guide channels and itself; calculating a second outer product ($x^T y$) between each pixel ($x$) in the one or more enhanced guide channels and the corresponding pixel ($y$) in the noisy image; blurring the first outer products to calculate a first moment matrix ($X^T X$) for each local neighbourhood wherein said blurring is controlled by one or more blurring parameters for the neighbourhood; blurring the second outer products to calculate a second moment matrix ($X^T Y$) for each local neighbourhood wherein said blurring is controlled by one or more blurring parameters for the neighbourhood; and calculating the parameters ($A$) of the denoising model for each local neighbourhood, comprising calculating an inverse matrix of the first moment matrix, and calculating a product of the inverse matrix and the second moment matrix, wherein the method further comprises training the machine learning model to infer the blurring parameters for each neighbourhood.

The machine learning model may be trained to infer the blurring parameters from the initial guide channels and (optionally) the noisy image.

According to the first aspect, there is also provided a graphics processing unit configured to render an image of a 3-D scene, the graphics processing unit comprising:

a first rendering block, configured to render a noisy image;

a second rendering block, configured to render one or more initial guide channels;

a first inference block, configured to derive one or more enhanced guide channels from the initial guide channels and the noisy image, using a first machine learning model;

a model fitting block, configured to, for each of a plurality of local neighbourhoods, calculate the parameters of a denoising model that approximates the noisy image as a function of the one or more enhanced guide channels; and

a model application block, configured to apply the calculated parameters to the one or more enhanced guide channels, to produce a denoised image.

According to the second aspect, there is also provided a graphics processing unit configured to render an image of a 3-D scene, the graphics processing unit comprising:

a first rendering block, configured to render a low-resolution noisy image;

a second rendering block, configured to render one or more low-resolution initial guide channels;

a third rendering block, configured to render one or more full-resolution initial guide channels, each full-resolution initial guide channel corresponding to a respective low-resolution initial guide channel;

a first inference block, configured to derive one or more low-resolution enhanced guide channels from the low-resolution initial guide channels and the low-resolution noisy image, using a first machine learning model;

a second inference block, configured to derive one or more full-resolution enhanced guide channels from the full-resolution initial guide channels, using a second machine learning model;

a model fitting block, configured to, for each of a plurality of local neighbourhoods, calculate the parameters of a denoising model that approximates the noisy low-resolution image as a function of the one or more low-resolution enhanced guide channels; and

a model application block, configured to apply the calculated parameters to the one or more full-resolution enhanced guide channels, to produce a full-resolution denoised image.

The second and third rendering blocks may be separate or may be provided by a single rendering block.

The first rendering block may be configured to render the noisy (optionally low-resolution) image by path tracing.

Optionally: the second rendering block may be configured to render one or more of the one or more (optionally low-resolution) initial guide channels by rasterization or ray-tracing. Optionally, the third rendering block may be configured to render the one or more full-resolution initial guide channels by rasterization or ray-tracing.

The noisy (optionally low-resolution) image may comprise indirect lighting in the scene, wherein the (optionally full-resolution) denoised image comprises an indirect lighting image, and the graphics processing unit may further comprise: a fourth rendering block, configured to render a direct lighting image; and a combination block, configured to combine the denoised image with the direct lighting image to produce a global illumination image. The fourth rendering block may be configured to render the direct lighting image by ray-tracing.

The noisy image may be a noisy global illumination image, comprising direct and indirect lighting in the scene, whereby the denoised image is a denoised global illumination image.

The third rendering block may be configured to render a surface reflectance image. The graphics processing unit may further comprise a product block, configured to calculate the product of the global illumination image or the denoised global illumination image and the surface reflectance image, to thereby produce a rendered image of the 3-D scene. Where different resolutions are used, the surface reflectance image may be rendered at full resolution, in particular by rasterization.

Also provided is a graphics processing system, configured to perform a method as summarised above, and/or comprising a graphics processing unit as summarised above. The graphics processing system may be embodied in hardware on an integrated circuit.

Also provided is a method of manufacturing, using an integrated circuit manufacturing system, a graphics processing system as summarised above.

Also provided is a method of manufacturing, using an integrated circuit manufacturing system, a graphics processing system as summarised above, the method comprising: processing, using a layout processing system, a computer readable description of the graphics processing system so as to generate a circuit layout description of an integrated circuit embodying the graphics processing system; and manufacturing, using an integrated circuit generation system, the graphics processing system according to the circuit layout description.

Further provided is computer readable code configured to cause a method as summarised above to be performed when the code is run, and optionally a computer readable storage medium having encoded thereon the computer readable code.

Also provided is an integrated circuit definition dataset that, when processed in an integrated circuit manufacturing system, configures the integrated circuit manufacturing system to manufacture a graphics processing system as summarised above.

Still further provided is a computer readable storage medium (optionally non-transitory) having stored thereon a computer readable description of a graphics processing system as summarised above that, when processed in an integrated circuit manufacturing system, causes the integrated circuit manufacturing system to manufacture an integrated circuit embodying the graphics processing system.

Also provided is a computer readable storage medium (optionally non-transitory) having stored thereon a computer readable description of a graphics processing system as summarised above which, when processed in an integrated circuit manufacturing system, causes the integrated circuit manufacturing system to: process, using a layout processing system, the computer readable description of the graphics processing system so as to generate a circuit layout description of an integrated circuit embodying the graphics processing system; and manufacture, using an integrated circuit generation system, the graphics processing system according to the circuit layout description.

Also provided is an integrated circuit manufacturing system configured to manufacture a graphics processing system as summarised above.

Also provided is an integrated circuit manufacturing system comprising: a computer readable storage medium (optionally non-transitory) having stored thereon a computer readable description of a graphics processing system as summarised above; a layout processing system configured to process the computer readable description so as to generate a circuit layout description of an integrated circuit embodying the graphics processing system; and an integrated circuit generation system configured to manufacture the graphics processing system according to the circuit layout description.

The layout processing system may be configured to determine positional information for logical components of a circuit derived from the integrated circuit description so as to generate a circuit layout description of an integrated circuit embodying the graphics processing system.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a flowchart illustrating a rendering method according to an example;

Figure 2 is a block diagram of a graphics processing unit for rendering, according to an example;

Figure 3A illustrates the model-fitting step of Figure 1 in greater detail;

Figure 3B shows a variant of the model-fitting of Figure 3A;

Figure 4 illustrates a variant of part of the method shown in Figure 1, which uses tile-based processing;

Figure 5 illustrates another variant of part of the method shown in Figure 1, using tile-based processing;

Figure 6A shows a variant of the model-fitting method illustrated in Figure 3A;

Figures 6B and 6C illustrate the creation of a mipmap pyramid according to an example;

Figure 7 illustrates an example of the blurring step in Figure 6A;

Figure 8 is a block diagram showing how a U-Net architecture can be augmented to produce blurring parameters, according to an example;

Figure 9 illustrates quantization and inverse quantization of data, according to an example;

Figure 10 is a flowchart illustrating an alternative to the method of Figure 1, according to another example;

Figure 11A is a flowchart illustrating a further alternative to the method of Figure 1, according to another example;

Figure 11B is a flowchart illustrating a variant of the method of Figure 11A;

Figure 11C is a flowchart illustrating another example;

Figure 12 is a flowchart illustrating a method of training a machine learning model, according to an example;

Figure 13 shows a graphics processing system in which a graphics processing unit is implemented; and

Figure 14 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.
Embodiments will now be described by way of example only.
Various techniques for rendering are known in the field of computer graphics. "Rendering", also known as image synthesis, refers to the process of generating an image of a virtual 3-D scene, as it would be viewed by a virtual camera at a particular position and orientation. The geometry of objects in the scene is modelled in three dimensions; and the rendering process approximates/simulates how light rays would arrive at the virtual camera from the interaction of light sources with the modelled geometry.
Path-tracing, ray-tracing, and rasterization are three rendering techniques. The terms "ray-tracing" and "path-tracing" are sometimes used interchangeably in the literature. For greater clarity, we will first define what we mean by these terms, in the present context.
As used herein, the term "path-tracing" refers to a stochastic sampling method, which simulates the transport of light in a 3-D scene. In some examples according to the present disclosure, path-tracing is capable of approximating global illumination by modelling interactions of all types between rays of light and objects in the scene, potentially including higher-order reflections (second and third bounces, etc). However, because of its stochastic nature, path-tracing is inherently noisy. Note that path-tracing is not limited to approximating global illumination. "Ray-traced ambient occlusion" is a kind of path-tracing, which calculates how exposed each point in the 3-D scene is to ambient lighting (rather than calculating global illumination as such). Ray traced ambient occlusion can be considered as a coarse approximation to indirect lighting.
As used herein, the term "ray-tracing" refers to a deterministic, noise-free method of simulating the transport of light in a 3-D scene, by modelling certain kinds of interaction between light rays and objects. Ray tracing typically only determines direct light, reflection, refraction, and the like, and does not depend on complex light paths interacting with multiple objects.
The term "ray-casting" refers to a specific kind of ray-tracing, in which a ray is cast along a single direct path, with no reflections or refractions.
Rendering by path-tracing and ray-tracing is distinct from rendering by "rasterization". In rasterization, 3-D scene geometry is mapped to pixels in 2-D screen space without taking into account the physical transport of light in the 3-D scene.

Overview

The quality of the denoising results using the guided filter depends in part on the availability of informative guide images (also referred to as guide channels). It is an open question how to choose an optimal set of guide channels, and the optimal set may depend on the types of the scene that the filter is called upon to denoise.
In addition, information contained in guide channels may not be readily available in a form useful to the guided filter in constructing the denoised image. For example, the depth and surface normal images contain geometry information relevant to reconstruction of cast shadows, but the guided filter may be unable to exploit them for this purpose without further processing or enhancement of the guide channels.
The inventors have recognised that the optimisation of guide channels can be addressed using machine learning methods. This opens up the possibility to synthesise, from a given set of initial guide channels, a set of enhanced guide channels that best enables the guided filter to carry out the denoising function. In other words, the guide channels derived may be new guide channels, different from any of those input to the optimisation process.

In particular, the inventors have recognised that a neural network can be trained to infer an enhanced set of guide channels from an initial set of guide channels. By processing the initial set of guide channels through the neural network, the neural network can extract structural information from the initial guide channels that would not otherwise be available to the affine model used by the guided filter. The enhanced set of guide channels output by the neural network embeds this information in a form in which it is accessible to the affine model. In other words, affine combinations of the enhanced set of guide channels can offer improved denoising, compared with linear combinations of the initial set of guide channels.

For example, using enhanced guide channels produced by a neural network, improved results have been observed in the rendering of soft indirect shadows, occlusions, and other visual characteristics of global illumination (compared with a baseline implementation using manually selected guide channels).

In general, any neural network architecture suitable for processing a set of images/channels may be used. The neural network architecture should be able to identify and exploit spatial structure in the image from local context, for example by means of convolution or attention layers. It has been found that a U-Net architecture produces good results. This architecture involves an encoder portion and a decoder portion. In the encoder portion, feature maps are downsampled in the spatial domain while being expanded into successively larger numbers of channels. In the decoder portion, an inverse process occurs - feature maps are up-sampled spatially while the number of channels is decreased. One or more skip connections may be provided, connecting the output of an encoder layer to the input of a respective decoder layer. The skip connection passes information between the encoder layer and respective decoder layer without down-sampling and upsampling. These skip connections improve the computational efficiency of the network, giving high quality denoising at relatively low computational cost (e.g. in terms of memory usage, bandwidth consumption, power and execution time).

In some examples, the affine model is calculated at a first resolution and applied at a second, possibly different resolution. In this case, there are two initial sets of guide channels - one for the first resolution and another for the second resolution. In some examples, a single neural network that processes multiple resolutions may be used. Alternatively, two neural networks may be provided, one for generating an enhanced set of guide channels at the first resolution, and another for generating a corresponding enhanced set of guide channels at the second resolution. The two networks may be trained together. It is also possible for a single high resolution network to provide two enhanced sets of guide channels: one used for generating the affine model and one for applying it.

The neural network(s) may be trained using a back-propagation algorithm, provided that the denoising algorithm using the guided filter is differentiable. (This is the case in the examples described below.)

It has further been found that the quality of the denoising results can be improved by providing the noisy image (or an image derived from it) to the neural network, alongside the initial guide channels. In other words, in examples according to the present disclosure, the neural network derives the enhanced guide channels based on the initial guide channels and the noisy image. In the case of enhanced guide channels at multiple resolutions, the noisy image is used at least when deriving the low-resolution enhanced guide channels.

<u>Rendering pipeline</u>

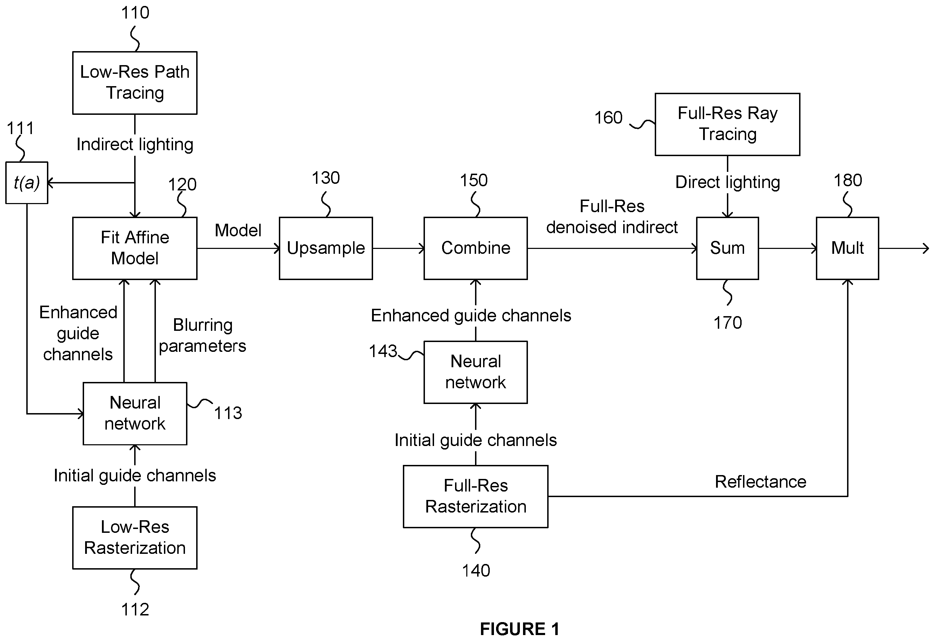

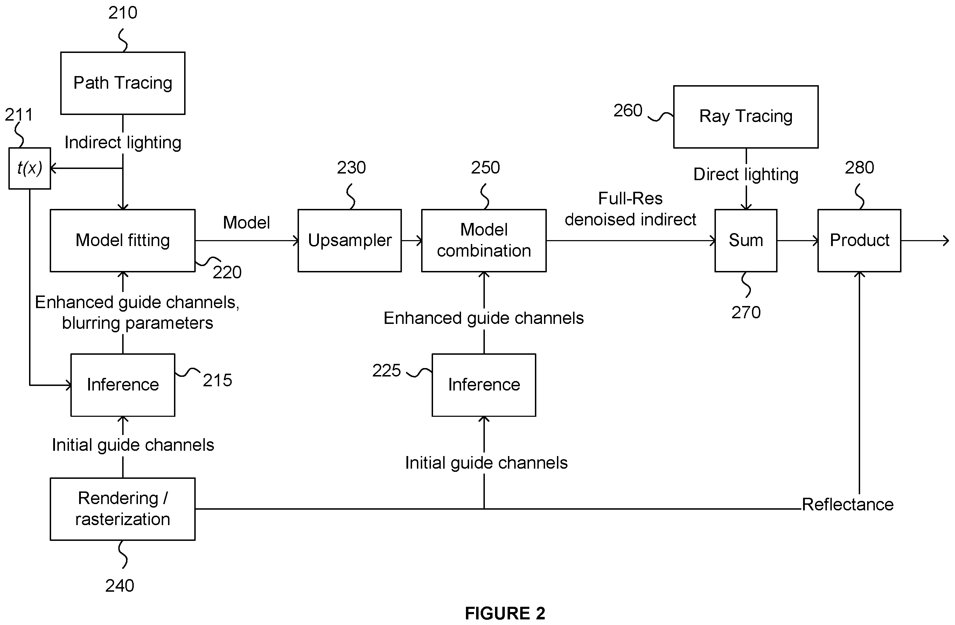

A first example of rendering an image will now be described with reference to Figures 1 and 2. Figure 1 is a flowchart illustrating a method of rendering an image of a 3-D scene according to an example. Figure 2 is a block diagram showing functional blocks of a graphics processing unit configured to carry out the method of Figure 1. The graphics processing unit (GPU) comprises first, second, third, and fourth rendering blocks. In this example, the first rendering block is a path-tracing block 210. The second and third rendering blocks are both provided by a rendering/rasterization block 240. The fourth rendering block is a ray-tracing block 260. The GPU also comprises a tone-mapping block 211, a model fitting block 220, an upsampler 230, a model combination block 250, a summation block 270 and a product block 280. The up-sampler 230 and the model combination block 250 together make up a model application block, responsible for applying the denoising model. The summation block 270 operates as a combination block, combining a denoised image, produced by the application of the denoising model, with an image produced by the fourth rendering block 260. The GPU additionally comprises a first inference block 215 and a second inference block 225. In the present example, both of these blocks are implemented by a (single) hardware accelerator, which is specially adapted for carrying out neural network calculations. However, this is not essential. In other examples, the inference blocks may be implemented elsewhere in the GPU, or by other hardware components, or in software. In some examples, the functions of the inference blocks may be implemented partly in the GPU and partly elsewhere.

In step 110, the path tracing block 210 produces a low resolution indirect lighting image by path tracing. In step 112, the rendering/rasterization block 240 produces low resolution initial guide channels in a first rasterization pass. The indirect lighting image and the initial guide channels correspond to one another, in that they are all rendered for the same viewpoint in the 3-D scene. They are also rendered at the same (low) resolution. The indirect lighting image is noisy, because of the stochastic nature of path tracing. The initial guide channels are noise free, because rasterization is deterministic. In the present example, the set of low resolution initial guide channels includes a depth image, a surface reflectance (for example, albedo) image, and a surface normal image. However, the set of low resolution initial guide channels need not include all these images (for example, the surface reflectance image might not be included). Optionally, other initial guide channels may be included, such as images identifying the materials of objects in the scene and/or images showing shadows in the scene.

One of the initial guide channels may contain an ambient occlusion guide. In the present example, this is produced by the rendering/rasterization block 240. The ambient occlusion guide is a guide channel that contains ambient occlusion data. Consequently, it characterises the spatial dependency of incident light on global lighting over the surfaces of (some or all of) the 3D models in the scene. The inventors have found that - surprisingly - the use of such ambient occlusion data in the initial guide channels can significantly enhance the quality of denoised images produced according to the method. Without wishing to be bound by theory, it is believed that this is because the ambient occlusion data incorporates information about self-shadowing as well as the structure of objects in the scene. It can therefore complement purely structural guide channels (for example, based on depth or surface orientation), since such guide channels do not incorporate any shadow information. When none of the available initial guide channels includes shadow edges, there is a risk that the denoising process will improperly blur such edges, thereby reducing image quality. Inclusion of an ambient occlusion guide can help to addresses this.

In the present example, two ambient occlusion guides are produced - namely, a low-resolution version and a full-resolution version.

The low resolution images are typically a fraction of the size of the desired full resolution images. For example, they may be smaller by a factor of two in each dimension (that is, both in height and in width), such that they are a quarter of the area and resolution of the full resolution images. In some examples, they may be a smaller fraction still of the full resolution images. For instance, the low resolution images may be smaller by a factor of four in each dimension, such that they are one sixteenth of the area and resolution of the full resolution images.

In step 111, the tone-mapping block 211 applies a tone-mapping function to the low-resolution indirect lighting image. The tone-mapping will be described in detail later below. The tone-mapped image is provided as an additional input to the first inference block 215, alongside the initial guide channels.

In step 113, the first inference block 215 derives a set of enhanced guide channels from the initial guide channels and the (tone-mapped) low-resolution indirect lighting image, using a first machine learning model. In the present example, the first machine learning model is a neural network - specifically, a convolutional neural network based on a U-Net architecture. The neural network takes as input the low resolution initial guide channels produced by the rendering/rasterization block 240 in step 112. The output of the neural network includes a set of enhanced guide channels. The output of the neural network also includes a set of blurring parameters, to be used in a later stage of the process.

The rendering method will produce a full resolution rendered image, based in part on the guide image (comprising the plurality of enhanced guide channels) and the noisy indirect lighting image. The low resolution images (that is, the guide image and the indirect lighting image) are passed to the model fitting block 220. In step 120, the model fitting block 220 fits the parameters of an affine denoising model for each pixel of the low resolution images, such that it can be used to map the low resolution guide image onto the low resolution indirect lighting image. For each pixel, the parameter estimation examines a local neighbourhood centred on the pixel and approximates the noisy indirect lighting image as a linear combination of the enhanced guide channels and a scalar offset, within this local neighbourhood. This produces a set of model parameters for each of the local neighbourhoods (that is, for each of the pixels).

In step 130, the upsampler 230 up-samples (e.g. by bilinear interpolation) the model parameters to full resolution. In step 140, the rendering/rasterization block 240 renders a set of full resolution initial guide channels in a second rasterization pass. The full resolution initial guide channels may correspond one-to-one with the low resolution initial guide channels (but this is not essential). Indeed, in some examples, the low resolution initial guide channels could be generated by subsampling the full resolution initial guide channels. However, the present inventors have found that savings in memory access bandwidth are possible by rendering the low resolution initial guide channels and full resolution initial guide channels separately, in two rasterization passes. This can avoid the need to store the full resolution multi-channel guide image and later retrieve it from memory for downsampling. Memory bandwidth can be a limiting factor in some hardware architectures and applications; therefore, reducing memory bandwidth is highly desirable. Another advantage of using low resolution initial guide channels is a reduction in the number of operations needed to produce the (low resolution) moment images, since fewer matrices will need to be summed when producing the moment images.

The full resolution initial guide channels (optionally including a full resolution ambient occlusion guide) are provided to the second inference block 225. In step 143, the second inference block 225 derives a set of full resolution enhanced guide channels from the full resolution initial guide channels, using a second machine learning model. Once again, in this example, the second machine learning model is a neural network - specifically, a convolutional neural network based on a U-Net architecture. According to the present example, the first and second machine learning models are based on the same neural network. However, this is not essential. In other examples, they may be based on different neural networks. The full resolution enhanced guide channels derived using the neural network in step 143 are provided to the model combination block 250.

As noted above, the initial guide channels in the present example include a surface reflectance (e.g., albedo) image. The full resolution surface reflectance (e.g., albedo) image is additionally provided to the product block 280. In other examples in which the surface reflectance image is not used as an initial guide channel, the surface reflectance image is still produced (i.e. as well as the initial guide channels) so that it can be provided to the product block 280.

In step 150, the model combination block combines the upsampled model parameters from the upsampler 230 with the full resolution enhanced guide channels produced by the rendering/rasterization block 240 in the steps 113 and 140. This involves generating each pixel as a linear combination of the full-resolution enhanced guide channels, wherein the linear combination is determined by the model parameters for that pixel. In the present example, since the image to be denoised was a noisy indirect lighting image, the output of the model combination block 250 is a full resolution denoised indirect lighting image.

In step 160, the ray-tracing block 260 renders a direct lighting image by ray tracing. As explained already above, ray tracing is deterministic. As such, it is inherently noise free and less computationally intensive than the rendering 110 of the indirect lighting image by path tracing. As a result of this lower complexity, the rendering of the direct lighting image at full resolution does not impose a large computational burden.

In step 170, the summation block 270 combines the denoised indirect lighting image provided by the model combination block 250 with the direct lighting image provided by the ray tracing block 260, by summing them. The result of the summation is a global illumination image, at full resolution. In step 180, the product block 280 multiplies (pixel by pixel) the full resolution surface reflectance image by the full resolution global illumination image. This produces the final rendered image of the scene under global illumination conditions.

The affine denoising model created in step 120 is based on the guided filter method of He et al. (Kaiming He, Jian Sun, and Xiaoou Tang, "Guided Image Filtering"; in: Daniilidis K., Maragos P., Paragios N. (eds) Computer Vision - ECCV 2010. Lecture Notes in Computer Science, vol 6311, Springer. https://doi.org/10.1007/978-3-642-15549-9 1). For each local neighbourhood Y of a noisy input image, this method attempts to find the affine transform $A$ that best maps a local neighbourhood X of a guide image to the corresponding local neighbourhood Y of the noisy input image. These local neighbourhoods may be represented as matrices, and the "best" transformation defined as a least squares optimal fit. That is, the solution $A$ is to be found to minimise the matrix equation $E = \|XA - Y\|_2^2$, where $X \in \mathbb{R}^{N \times G}, A \in \mathbb{R}^{G \times M}$ and $Y \in \mathbb{R}^{N \times M}$, and $N$ is the number of pixels in the local neighbourhood, $G$ is the number of (enhanced) guide channels (including the offset term), and $M$ is the number of output channels. It should be understood that the labels for the dimensions are essentially arbitrary.

There may be multiple enhanced guide channels in the guide image, as in the present example. In this case, the denoising model $A$ is an affine transform with multiple input signals. According to the present formulation (and differing from the formulation of He et al.) the offset term is included directly in the matrix multiplication, by adding an additional enhanced guide channel that consists of an array of ones with corresponding values in the $A$ matrix. This additional enhanced guide channel of ones is constant, so may be implicit in block 220 so that bandwidth is not wasted transmitting it. The matrix $X$ representing the guide image channels is thus composed as follows

$$X = \begin{pmatrix} 1 & X_{0,0} & X_{0,1} & X_{0,2} \\ 1 & X_{1,0} & X_{1,1} & X_{1,2} \\ \dots & \dots & \dots & \dots \\ 1 & X_{N-1,0} & X_{N-1,1} & X_{N-1,2} \end{pmatrix}.$$

Here, each row represents a pixel in the local neighbourhood centred on the pixel of interest. Each column represents one channel of the overall multi-channel guide image. The least squares optimisation problem is modified to include regularization, which gives a smoother result and reduces susceptibility to numerical instability:

$$E = \|XA - Y\|_2^2 + N\|U^{1/2}A\|_2^2.$$

Here, $N$ is a scalar, introduced for consistency with the formulation of He et al. $U$ is a diagonal matrix constructed so that the entry corresponding to the channel of ones in $X$ is zero:

$$U = diag(0, \epsilon_0, \epsilon_1, \dots).$$

The numbers $\varepsilon$ are positive. Suitable exemplary values are of the order of 0.0001. Minimising $E$ with respect to $A$ has the closed form solution:

$$A = (X^T X + NU)^{-1} X^T Y.$$

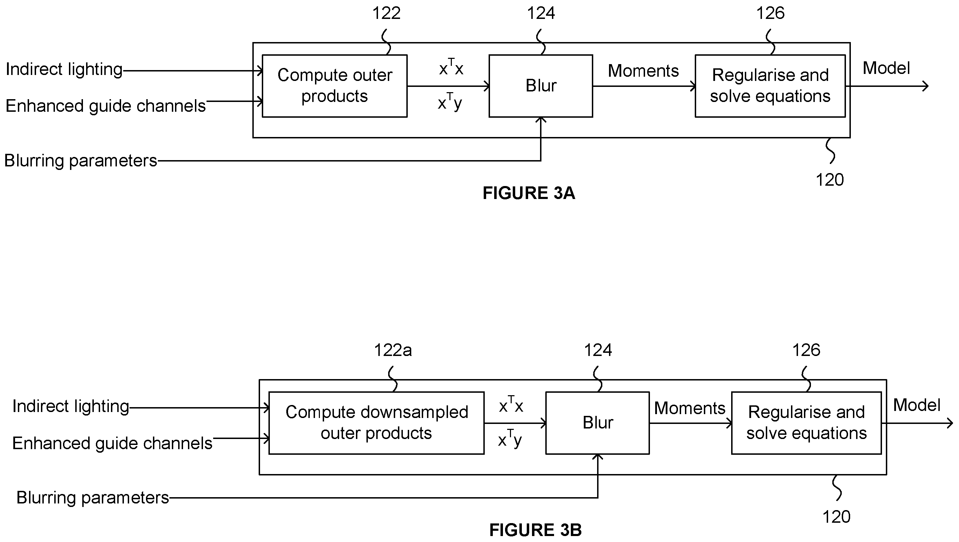

A denoised pixel is given by the vector-matrix product $xA$, where $x$ is the structure vector of the pixel (a row of the $X$ matrix), and $A$ is the denoising model constructed from the neighbourhood of the target pixel. The denoised output is given by multiplying the guide image and the corresponding local model parameters $A$ at each pixel. The computation of the model parameters A can be broken down into stages, as illustrated in Figure 3A. The first stage involves calculating the terms $X^T X$ and $X^T Y$, which are sometimes referred to as "moment matrices" or simply "moments". This in turn can be broken down into two stages. Firstly, per-pixel outer product calculations are performed. Optionally, this is followed by down-sampling step (not shown explicitly in Figure 3A), to further reduce computational burden. Secondly, the outer products are summed over the local neighbourhood ("blurred") to produce the moment matrices. Although not indicated by the equations above (which explain how to calculate a matrix $A$ for a given local neighbourhood), it can be shown that spatially blurring the outer product terms after they have been calculated is equivalent to explicitly constructing the $X$ and $Y$ matrices and performing the matrix multiplications necessary to produce the moment matrices. The calculation of the outer products by the model fitting block 220 is indicated by step 122 in Figure 3A. We will refer to the output of step 122 as first outer products $x^T x$ and second outer products $x^T y$. In step 124, the model fitting block 220 blurs the outer products, to produce the moment matrices. We will refer to the outputs of the blurring step as the first moment matrix $X^T X$ and second moment matrix $X^T Y$. The blurring can be performed in a variety of different ways and will be described in further detail below.

After blurring the moments in step 124, the model fitting block 220 adds the regularization and solves the least squares problem (step 126). This involves inverting the regularized first moment matrix, followed by multiplying the result of the matrix inversion by the second moment matrix, as indicated in the equation above. The output of step 126 is a model matrix for each pixel of the low-resolution image (or, if the outer products were downsampled, a model matrix corresponding to each of a subset of pixels of the low-resolution image). In the method of He et al., the model parameters are further blurred spatially. However, the present inventors have found that this is unnecessary and in fact can lead to lower image quality in many cases. Therefore, the method proceeds without blurring the model parameters.

As explained already above, the model parameters are upsampled in step 130 by the upsampler 230. This converts them to full resolution. They are then combined (in step 150) with the full resolution guide image produced by the second inference block 225. This operation implements the formula Y=XA, as discussed previously.

Figure 3B shows a variant of the method of Figure 3A, in which the downsampling is integrated into the step 122a of computing the outer products. The input is the same as in Figure 3A: row vectors (y), one per pixel of the noisy image, containing indirect lighting; and respective row vectors (x) containing the enhanced guide channels. However, instead of calculating the first outer products $x^T x$ and second outer products $x^T y$ separately for each pixel, non-overlapping blocks of pixels are defined. Within each block, the first outer products are summed to produce a single first outer product matrix for the block. Likewise, the second outer products are summed to produce a single second outer product matrix for the block. The block size may be 8x8, for example. In some examples, the summation over each block does not need to be implemented as a separate operation. It can be implemented in a single step by concatenating the pixel vectors into matrices prior to the outer product operation. That is, instead of a vector-vector outer product calculation, the outer product operation becomes a matrix-matrix multiplication. The resulting outer products are produced at a lower resolution than the noisy image. This reduction in resolution can significantly reduce the volume of data that needs to be transferred to the subsequent blurring operation 124. It can also reduce the computational burden for the blurring operation 124 and solving operation 126. Note that solving the least squares problem in step 126 requires matrix inversion and several matrix multiplications. Reducing the resolution of the outer products reduces the number of pixels for which this solving needs to be performed, which can result in a significant saving in computational effort.

In the example of Figure 3B, the model parameters are produced at the same resolution as the outer products (which is a lower resolution than the noisy image). The model parameters are upsampled in step 130 to match the resolution of the full-resolution enhanced guide channels.

Tiling

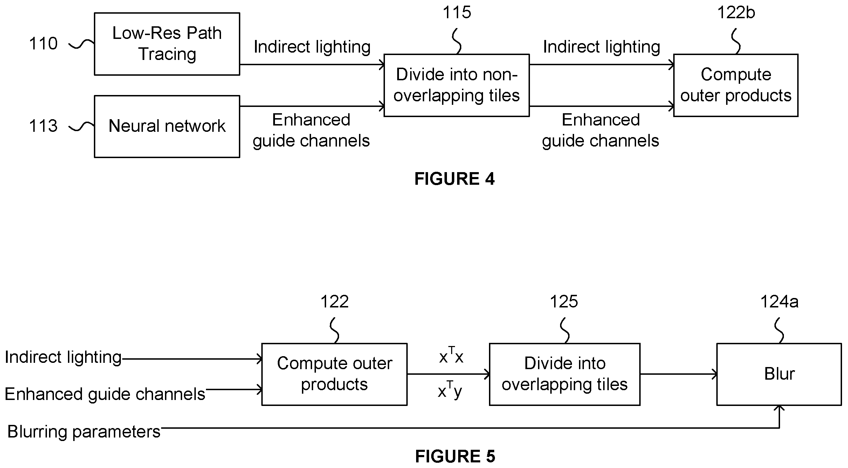

Some optional additional steps that can be introduced into the model fitting 120 are illustrated in Figures 4 and 5. The calculations involved in the model fitting are somewhat computationally intensive and data intensive. The inventors have recognised that it may be advantageous to perform the model fitting in a tile-based manner. This approach involves breaking the data down into tiles (which may in general be overlapping or non-overlapping) and processing each tile separately. This has several potential advantages. Firstly, the size of a tile may be selected so that all the data needed to perform a calculation for one tile can be stored in on-chip memory in the GPU. This can avoid the need to read and write data from and to an external memory, which will typically be a slower operation than accessing on-chip memory. Secondly, the ability to divide the processing into tiles facilitates parallel implementation, when multiple processors or cores are available in the GPU. Note however that tiling is useful independently of parallelisation, because of the first advantage. Even if tiles are processed consecutively, by a single core or single processor, the effect of greater data locality and reduced memory access bandwidth can still facilitate increased processing speed and/or reduced power consumption.

Tiling can be applied in at least two ways. As illustrated in Figure 4, tiling can be employed in the calculation of the outer products. The GPU divides the low resolution noisy indirect lighting image and the guide image into tiles in step 115. Then, in step 122b, as a variation on step 122, the outer products are computed for each tile independently of the others. The tiles created in step 115 are non-overlapping, because the data needed for the outer product calculations is different from each tile to the next. This is because the calculation of outer products is inherently a per-pixel operation.

Alternatively, or in addition, tiling can be employed in the blurring, which computes the moment matrices from the outer products. This is illustrated in Figure 5. The outer products generated in step 122 (or step 122a or 122b) are divided into overlapping tiles in step 125. Blurring is applied to each tile independently, in step 124a. Note that the tiles used for blurring necessarily overlap to some extent, because of the spatial extent of the local neighbourhoods that are used to create the denoising model. These local neighbourhoods are reflected in the size of the filter kernel used for the blurring.

Blurring

In previous work, the blurring techniques involved hand-coded solutions. It has now been recognised that it is advantageous to train the neural network to generate one or more blurring parameters for each local neighbourhood. The (one or more) blurring parameters can be generated at the same resolution as the outer products. They control the strength of blurring, for each local neighbourhood. Inferring the blurring parameter(s) for each local neighbourhood "online" in this way can enable the degree of blurring to be tailored to the content of the local neighbourhood. For example, in uniform regions of the image, with a high level of noise, the blurring strength can be increased, to deal with the noise more aggressively. Typically, in less noisy regions, it is desirable to have a smaller blur radius that preserves as much as possible the information of the moments over which the kernel is centred. Similarly, in regions of the image where the guide channels show lots of structural detail in the scene, the blurring strength can be moderated, to avoid unwanted blurring across edges (e.g. of objects in the scene). The neural network can be trained to infer a set of blurring parameters that is optimal, in some sense, over a training data set.

In some examples, the blurring uses an isotropic filter (for example, a Gaussian blur). In this case, the neural network is trained to produce a single blurring parameter per neighbourhood. The parameter controls the width of the blurring filter kernel (which is the same in all directions). For example, the parameter can control a sigma parameter of a Gaussian blur kernel. A wide filter kernel corresponds to a "stronger" blur, while a narrow filter kernel corresponds to a "weaker" blur. An isotropic filter kernel, such as a Gaussian blur, may be implemented efficiently in a separable fashion, as two one-dimensional filters. Both of these 1-D filters can be controlled by a single blurring parameter.

In other examples, the blurring uses an anisotropic filter (again optionally a separable filter, optionally a Gaussian blur). In this case, the neural network may be trained to produce a pair of blurring parameters for each local neighbourhood. One parameter of the pair controls the width of the filter kernel in a first dimension, while the other parameter of the pair controls the width of the filter in a second dimension. For a separable filter, the first and second dimensions may be the vertical and horizontal dimensions, or vice versa. Separable anisotropic blurring can offer a good compromise between computational complexity and adaptability. It can enable the aspect ratio of the filter to adapt to the local scene structure and noise content, without significant increase in computational burden.

In still other examples, the neural network may be trained to generate more than two blurring parameters for each neighbourhood. For example, three parameters could be used to control a major axis width of the blurring kernel, a minor axis width of the blurring kernel, and an orientation of the blurring kernel. In this case, however, separable filtering would no longer be possible, since the major and minor axes would (in general) no longer be aligned with the horizontal and vertical dimensions. This can make the blurring even more adaptable to the scene content in each local neighbourhood, but at the expense of increased computational complexity.

By including the noisy image (or an image derived from it) as an input to the neural network, the neural network can adapt the blurring parameters to the degree of noise in each image neighbourhood. Meanwhile, as the neural network also receives the set of initial guide channels as inputs, it can adapt the blurring parameters to the scene structure - for example, it can avoid heavy blurring across shadow edges in the scene.

The blurring (step 124 or step 124a) can be carried out in a variety of ways. The purpose of the blurring is to sum the outer products $x^T x$ and $x^T y$ over a local neighbourhood centred on the pixel of interest, to generate the moment matrices $X^T X$ and $X^T Y$. In some examples according to the present disclosure, the sum is a weighted sum, typically emphasizing the contribution of pixels in the centre of each neighbourhood and de-emphasizing the contribution of peripheral pixels of the neighbourhood. There are various ways to implement this efficiently. In one example, the calculation of the moment matrices is accelerated by reusing computations between overlapping regions and taking advantage of fast image filtering techniques. Let each pixel in $X$ be represented by a row vector $x$, and each pixel in $Y$ by a row vector $y$. Calculate $x^T x$ and $x^T y$, the outer products, for every output location. Considered over the whole image, this gives 4D tensors with example dimensions [H,W,N,N] and [H,W,N,M], where H and W are the image height and width, and N and M are the numbers of channels in *X* and *Y*, respectively. Convolve a 2D box filter across the first two dimensions in these tensors. This box filter can be implemented using an integral image or separable horizontal and vertical kernels for efficiency. This can be shown to be equivalent to building the moments matrices:

$$\{X^T X\}_{i,j} = X^T_{:,i} X_{:,j} = \sum_p X_{p,i} X_{p,j} = \left\{ \sum_p X^T_{p,:} X_{p,:} \right\}_{i,j},$$

$$X^T X = \sum_p X^T_{p,:} X_{p,:}.$$

Here, $\{X\}_{i,j}$ is the element on the $i$th row and $j$th column of the matrix *X*. $X_{p,:}$ is the row vector that is the $p$th row of *X*. $X_{:,i}$ is the column vector that is the $i$th column of *X*. In this way, the moment matrix $X^T X$ can be written as the sum of the outer products of the rows of *X*. Due to the overlap between local neighbourhoods and the fact that linear filters can be computed cheaply, it is efficient to construct it in this way. A similar formulation applies to the second moment matrix $X^T Y$.

The filter described above implements simple box filtering. This can be accelerated in a number of ways. One option is to use integral images (also known as summed area tables) to precompute the sums of the outer products up to and including every pixel in the low resolution image. The sum of the outer products in an arbitrary desired rectangular area can then be derived from the integral image, based on the integral values at four corners of the rectangle. The blurring parameters control the height and width of the rectangle, in this example.

Although a box filter is efficient to compute, it gives equal weighting to all pixels in the local neighbourhood. Better results may be achieved by giving pixels close to the centre of the neighbourhood more influence than those at the edges. The challenge is to find efficient ways to implement this more complex kind of filtering, to achieve a good balance between computational efficiency and image quality.

One approach that offers good potential to reconcile these competing requirements is to use mipmaps to implement the blurring. Mipmapping as such is known in the computer graphics literature, where it has been applied in the context of texture sampling. It uses a scale space pyramid, in which each level of the pyramid (sometimes referred to in the art as a "chain") is produced by downsampling the preceding level. In some examples, each level of the pyramid is produced from the preceding level by a 2 x 2 box filter. This can be computed recursively by a bilinear resampling of the preceding layer. The present inventors have recognised that a mipmap pyramid can be computed for each channel of the outer products, and these mipmaps can then be used to support an efficient implementation of the blurring.

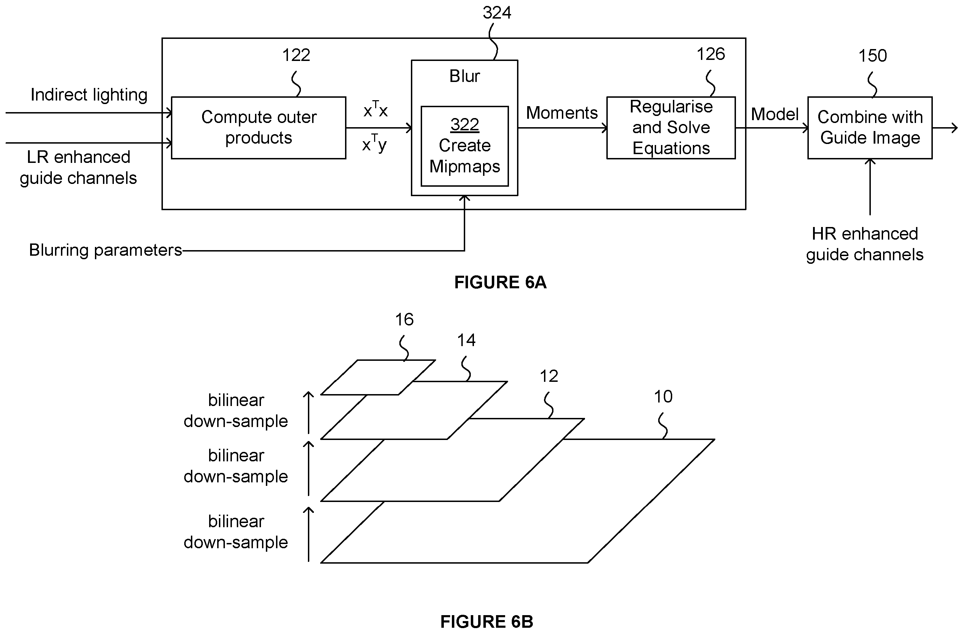

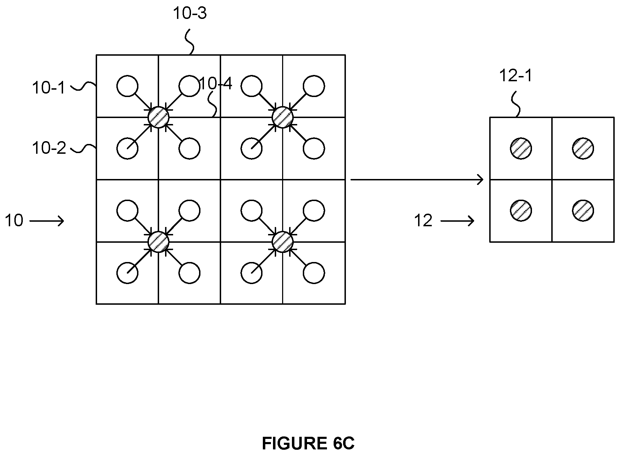

Figure 6A illustrates a variant of the method of Figure 3A, incorporating the use of mipmapping. In step 122, the model fitting block 220 calculates the outer products (as before); and in step 322 it creates mipmaps from them as part of the blurring process. This process is illustrated in Figure 6B. At the bottom level of the pyramid is the original outer product tensor 10 (shown as a 2-D array for simplicity, although it is in fact a higher-dimensional tensor). This is spatially (e.g. bilinearly) downsampled to produce the second level 12 of the pyramid. The second level is downsampled to produce the third level 14, and this in turn is downsampled to produce the fourth and final level 16. Figure 6C is a graphical illustration of the bilinear downsampling when producing the second level from the bottom level. Four pixels, 10-1 to 10-4, of the original outer product array are averaged to produce one pixel 12-1 of the second level of the pyramid. This is repeated for every adjacent 2 x 2 pixel block of the original outer product array. Each level of the pyramid is therefore approximately one quarter the size of the preceding level. In general, this process may continue to be iterated until one or both spatial dimensions reaches 1, or until a sufficiently low resolution has been reached.

Once the mipmaps have been calculated for each outer product, the blurring operation (step 324) is implemented by selecting the relevant level(s) of the pyramid and sampling appropriately to obtain the blurred version of the outer product. In some examples the blurring consists solely of a sampling operation at an appropriate level of the mipmap pyramid. But in other examples, the blurring can optionally include applying a filter to the samples retrieved from the mipmaps. Because of the reduced resolution of the higher pyramid levels, the mipmaps can enable filtering to be implemented with a smaller number of calculations than if a filter of the same size were to be applied directly to the outer products. The blurred moments output from the blurring step 324 are processed as before, in step 126. The blurring parameters can be used to select the appropriate level of the pyramid, the sampling positions and/or the size of the filter used at the selected level.

Some examples of implementations based on mipmaps will now be described. Typically, one or more mipmap levels are selected based on the size of the blurring filter kernel that we wish to construct (controlled by the blurring parameters). In some examples, as mentioned above, individual samples from the mipmaps may be used directly to produce the blurred moments. This would implement a relatively simple blurring filter, with an effective kernel size corresponding to the level of the pyramid that is selected. In its simplest form, the blurring can be performed based on nearest neighbour sampling, although this may have drawbacks in the form of potential aliasing artefacts.

In other examples, the mipmap pyramid may be sampled bilinearly at a single level of detail. In still other examples, the mipmaps may be sampled between levels using trilinear sampling. This involves bilinear sampling at two successive levels of detail, with a linear interpolation between the results. In still other examples, the mipmaps may be sampled using bicubic sampling. Bilinear, trilinear and bicubic sampling are commonly used in texture-sampling applications of mipmaps, and, because of this, the operations may be hardware-accelerated on some GPUs. This can be exploited to further speed up the blurring calculations.

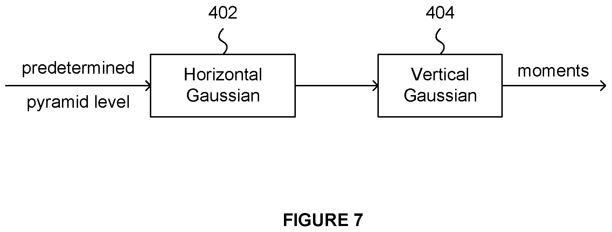

The samples extracted from the mipmaps (by any chosen sampling regime) can then be (further) filtered, if desired, to produce the blurred moments - typically using a small low-pass filter kernel. Figure 7 illustrates one example of blurring 324 in this way. Samples are extracted from a selected level of the mipmap pyramid and are filtered firstly with a horizontal Gaussian filter 402 and secondly with a vertical Gaussian filter 404. As discussed above, separable filtering in this way, using two successive, orthogonal, one-dimensional filters, can decrease the computational complexity, and increase the speed. The use of Gaussian kernels is one example of giving greater weight to samples in the centre of the neighbourhood than those at the edges. Other examples are possible. An infinite impulse response (IIR) filter could be used instead of a Gaussian, for instance.

Of course, it should be understood that use of mipmaps / multiscale pyramids is just one way to implement the blurring efficiently. Other efficient filtering approaches are possible.

Modification of the neural network to produce blurring parameters

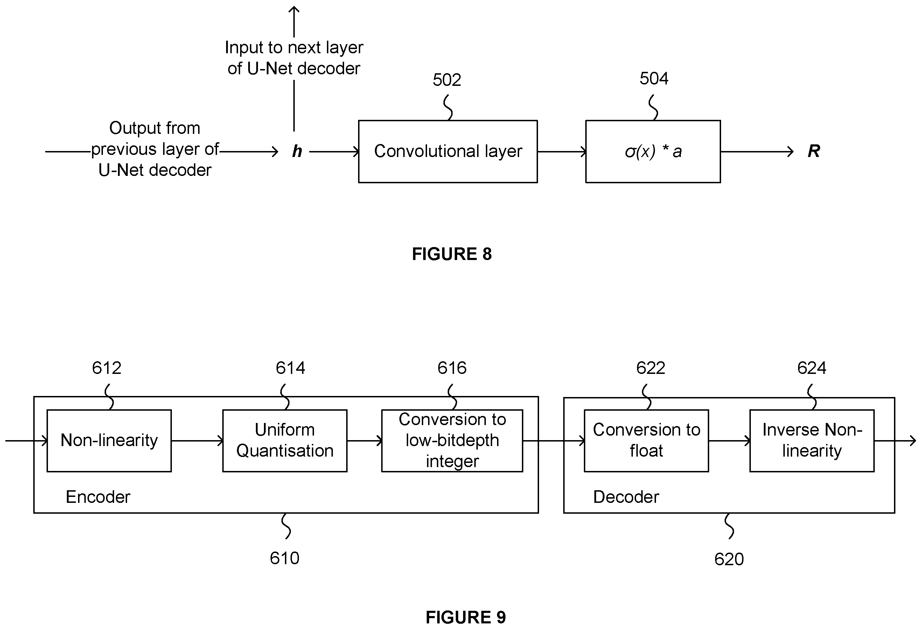

In the present example, the same neural network is used to produce both the enhanced guide channels and the blurring parameters. As mentioned above, the neural network in the present example is based on a U-Net architecture. It is convenient to infer the blurring parameters at the intended resolution from the hidden activations at a suitable layer of the decoder portion of the U-Net. Figure 8 shows an example of how the U-Net decoder can be augmented to produce blurring parameters.

In the present example, an activation $\mathbf{h}$ with dimensions $\frac{H}{8} \times \frac{W}{8} \times N$ is taken from the U-Net decoder. The spatial resolution matches that desired for the blurring parameters. The activation $\mathbf{h}$ is passed to an additional convolutional layer 502 with $N$ input channels and 2 output channels. The output of the layer 502 therefore has dimensions $\frac{H}{8} \times \frac{W}{8} \times 2$ (one channel per blurring parameter, two blurring parameters for each of $\frac{H}{8} \times \frac{W}{8}$ local neighbourhoods). The output of the convolutional layer is then passed to a sigmoid function $\sigma(x)$ and multiplied element-wise by a scalar value $a$, in a layer 504. The sigmoid normalizes all the values to the range [0,1]. The possible values for the blurring strength $\mathbf{R}$ (in each dimension - vertical and horizontal) will thus range between 0 and $a$. The scalar parameter $a$ can be set as a user-defined constant. Alternatively, it can be learned during training of the neural network. (The weights for the convolutional layer 502 are also learned during training.)

This shows how the blurring parameters can be produced efficiently by a relatively inexpensive extension to the neural network that generates the enhanced guide channels.

Normalization

As explained above, a regularization is added to the moment matrix $X^T X$ before matrix inversion, in order to increase numerical stability. However, the inventors have found that it is advantageous not to rely entirely on the regularization to avoid numerical instability. Better quality rendering results can be achieved by (alternatively or additionally) normalizing the moment matrices. In the present example, both moment matrices are normalized so they appear as if they were generated from data having zero mean and unit standard deviation. This is achieved by extracting mean and standard deviation statistics from the original moment matrix. The first moment matrix $X^T X$ can be partitioned as:

$$X^T X = \begin{pmatrix} X^T X_{1,1} & X^T X_{1,2:} \\ X^T X_{2:,1} & X^T X_{2:,2:} \end{pmatrix} = \begin{pmatrix} N & N\mu_X \\ N\mu_X^T & N\left(\sigma_X^T \sigma_X \cdot \hat{X}^T \hat{X} + \mu_X^T \mu_X\right) \end{pmatrix}.$$

The normalized version can be extracted by the calculation:

$$\hat{X}^T \hat{X} = \frac{\frac{X^T X_{2:,2:}}{N} - \mu_X^T \mu_X}{\sigma_X^T \sigma_X}.$$

Where

$$\sigma_X = \sqrt{\text{diag}\left(\frac{X^T X_{2:,2:}}{N} - \mu_X^T \mu_X\right)}$$

Here, $\mu$ is the mean, and $\sigma$ is the standard deviation of the data X. Similarly, the second moment matrix $X^T Y$ can be rewritten as:

$$X^T Y = \begin{pmatrix} X^T Y_{1,1:} \\ X^T Y_{2:,1:} \end{pmatrix} = \begin{pmatrix} N\mu_Y \\ N\left(\sigma_X^T \mathbb{1} \cdot \hat{X}^T Y + \mu_X^T \mu_Y\right) \end{pmatrix}.$$

Where $\mathbb{1}$ is a row vector of 1s of a compatible length.
From which the normalized version can be extracted as:

$$\hat{X}^T Y = \frac{\frac{X^T Y_{2:,1:}}{N} - \mu_X^T \mu_Y}{\sigma_X^T \mathbb{1}}.$$

The denoising model is constructed from the normalized matrices instead of the original moment matrices. The transformations used for normalization should be reversed when later applying the denoising model in the model combination block 250. In particular, the model combination block calculates the product XA by applying the "normalized" model parameters $\hat{A}$ as follows:

$$xA = x\hat{A} - \mu_X^T \hat{A} + \mu_Y^T.$$

Normalization has been found to help reduce unwanted blurring across structural boundaries in the scene (helping to avoid "glow" around objects, for example) as well as reducing noise from badly conditioned matrices.

Quantization

Memory access bandwidth and storage may be further reduced by quantizing data for transfer to and from the GPU. Although it may be beneficial to perform calculations in a floating point format, it may be possible to store and transfer the data in low-bitdepth integer formats. This can reduce the bandwidth required for transferring the data between the GPU and memory. Memory access bandwidth is a particularly precious resource when transferring data to an off-chip memory. Experiments have shown that the guide image can be stored in 8-bit integer format (signed or unsigned, as appropriate for the numerical range of each initial guide channel and/or enhanced guide channel). The image quality of the resulting denoised images is closely comparable to that achieved using floating point guide channels. Experiments have shown that greater care may be required with lighting images. In particular, direct (linear) quantization has been found to produce sub-optimal results in terms of the quality of the denoised output images. The inventors have discovered that the use of non-linear quantization can give better results in this context, while still achieving a reduction in memory access bandwidth. Figure 9 illustrates one way of encoding 610 and decoding 620 a lighting image, for use in the rendering method of the present example. This may be applied in particular to the noisy indirect lighting image produced by the path-tracing block 210. However, it may also be applied to other lighting images, such as the direct lighting image produced by the ray tracing block 260, as well as to the final rendered output image. In step 612, a nonlinearity is applied to the floating point lighting image. That is, the input floating point values are transformed by mapping them to second floating point values, using a nonlinear function. The transformed input values are then subjected to uniform quantization in step 614. The combination of the nonlinearity and the uniform quantization is to provide a greater density of quantization levels for darker regions of the image, while lighter regions of the image are quantized relatively sparsely. Suitable nonlinearities for achieving this effect include a square root function and a logarithm function. Following quantization in step 614, the quantized floating point numbers are converted to low-bitdepth integers in step 616. The low-bitdepth integers are then transferred from the GPU to the memory (for example, an on-chip or external memory). The quantization reduces both the amount of data to be stored in the memory and, more importantly, the bandwidth required to transfer the data to and from the memory. In the present implementation, the low-bitdepth integers are stored with a bitdepth of 8 bits. However, different low-bitdepth formats may be used for different guide channels and/or the noisy image. That is, during any given process to produce a denoised image, the different guide channels and the noisy image need not use the same low-bitdepth format - they can be encoded and decoded independently to and from different formats. This may be advantageous, for example, if it were found to be beneficial to the overall result to use more bits for the depth than for the surface normal components.

When the data is needed (for example, when it is retrieved from the memory for the calculation of the outer products), it is decoded 620 to invert the nonlinear quantization. In step 622, the low-bitdepth integers are converted back to floating point numbers. Then, in step 624, an inverse nonlinearity is applied, to reverse the effect of the nonlinear function in step 612. For example, if a square root function was applied in step 612, a quadratic (squaring) function would be applied in step 624. If a logarithmic function was applied in step 612, the function applied in step 624 will involve an exponential.

The denoised output image may also be quantized, after it is produced. This provides similar benefits to those explained above, i.e. a saving of bandwidth when outputting the denoised image, by outputting it at a lower bitdepth (compared to without the quantization step). This can be particularly beneficial because the denoised output is usually significantly larger than the noisy, low-resolution, input and therefore would represent a significantly larger bandwidth load if output in a non-quantized manner.

Tone-mapping

The tone-mapping function 111 performed by the tone-mapping block 211 will now be described in more detail. It is desirable to perform denoising in a linear colour space. When denoising images rendered in linear RGB space, with stochastically sampled illumination, it is likely that the dynamic range of the rendered frame will be large - with some very bright pixels and some very dark pixels. When training the neural network, normalised and uniform input distributions usually lead to better training outcomes. Light intensity however is Poisson distributed.

To address this, the inventors have found that it may be advantageous to normalise the noisy image before it is input to the neural network. The tone-mapping curve / function can be used for this. The function compresses the dynamic range - for instance, using a logarithmic function. In the present example, the following logarithmic tone-mapping function is used:

$$t(x) = \log(1+x)^{1/2.2}$$

As shown in the diagram, the tone-mapping operator is applied only to the noisy image that is fed into the neural network. For fitting the linear model, the unmodified noisy image is used. This helps to produce an unbiased denoised estimate of the noisy input image. Applying the tone-mapping operator to the noisy image before it is input to the model fitting step would distort the correct energy levels of the image.

Alternative pipelines

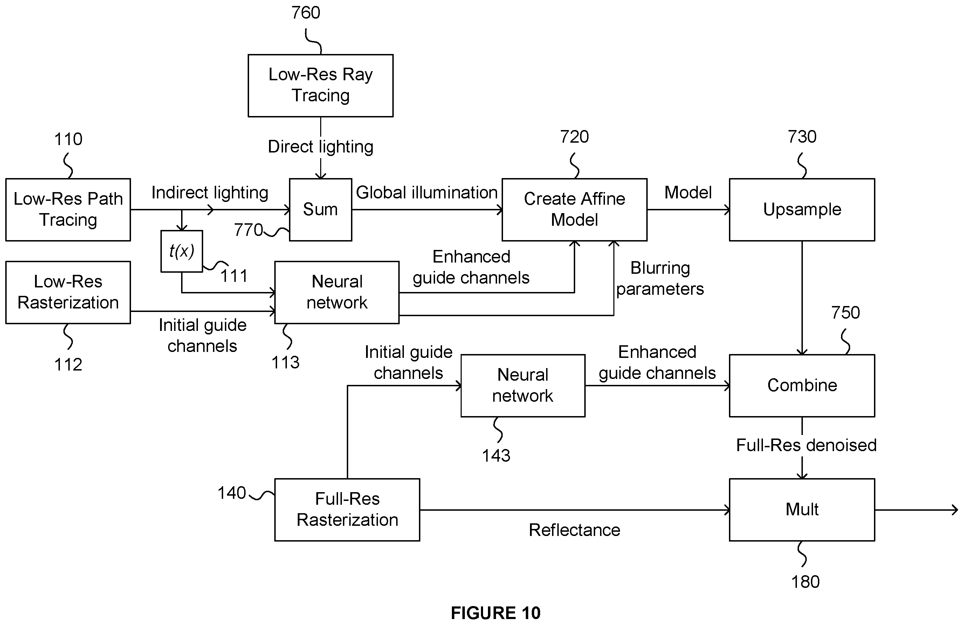

The pipeline illustrated in Figure 1 is not the only way to render images using low resolution denoising by guided filtering. Figure 10 illustrates another example. Figure 10 differs from Figure 1 in that the noisy low resolution indirect lighting image is combined with a direct lighting image before the denoising procedure. In steps 110 and 112, as before, the low resolution noisy indirect lighting image is rendered by path tracing and the low resolution initial guide channels (other than the optional ambient occlusion guide) are rendered by rasterization. The (optional) ambient occlusion guide is produced in low-resolution and full resolution versions. In step 111, the tone-mapping function is applied to the noisy indirect lighting image. The low resolution initial guide channels, together with the tone-mapped noisy indirect lighting image, are processed by the neural network in step 113, to derive low resolution enhanced guide channels and blurring parameters. In step 140, the rendering/rasterization block 240 renders a set of full resolution initial guide channels (corresponding to the low resolution initial guide channels). In step 143, as before, the second inference block 225 derives a set of full resolution enhanced guide channels (corresponding to the low resolution enhanced guide channels), based on the full resolution initial guide channels.

However, instead of rendering a full resolution direct lighting image in step 160, the ray tracing block renders a low resolution direct lighting image in step 760. The low resolution direct lighting and low resolution indirect lighting images are summed in step 770. The resulting global illumination image is noisy because it includes the indirect lighting. This noisy image is passed to the model fitting block and the model parameters are estimated, in step 720, in the same way as described above for step 120. The resulting model parameters, which are produced at low resolution, are up-sampled in step 730 and combined with the full resolution enhanced guide channels in step 750. This produces a full resolution denoised global illumination image. In step 180, just as in Figure 1, this global illumination image is combined with the surface reflectance image to produce the final rendered output image. For best results with the pipeline of Figure 10, the low resolution images would preferably be the same size (same resolution) as the full resolution images. Otherwise, there is a risk of sub-optimal reconstruction of shadow edges, with unwanted blurring being introduced across these edges.

In another variation of the pipeline, the ray tracing 160 or 760 may be replaced by rasterization, optionally using shadow mapping, for example. In yet another variation, instead of feeding the tone-mapped indirect lighting image to the neural network, the low-resolution noisy global illumination image produced in step 770 is input to the tone-mapping function, and the resulting tone-mapped global illumination is fed to the neural network.

Referring again to the pipeline of Figure 1, it was explained above that the "full-resolution" images have a resolution that is greater than or equal to the resolution of the "low-resolution" images. When the "low-resolution" images have the same resolution as the "full resolution" images, it should be understood that the rasterizations in steps 112 and 140 may be performed in a single step, since the same set of initial guide channels can be used when calculating the model parameters and applying them. Alternatively, they may still be performed as two steps (exactly as shown in Figure 1) wherein step 140 repeats the rasterization of the initial guide channels that was performed in step 112. Likewise, a single ambient occlusion guide may be produced at the full resolution. The upsampling step 130 can be eliminated (if the model parameters are produced without downsampling).

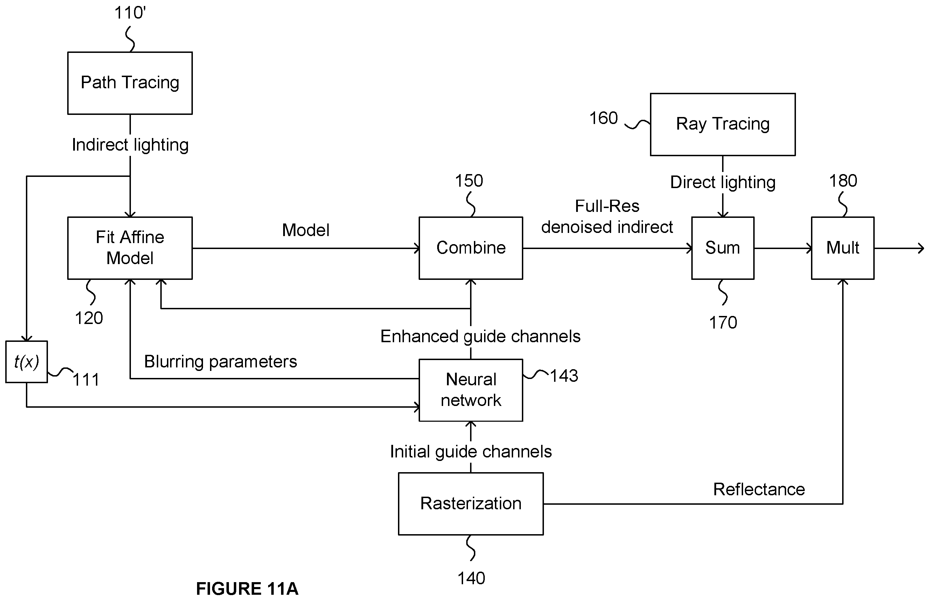

Figure 11A illustrates a simplified pipeline that may be adopted when the entire pipeline operates at the same resolution. Here, the same enhanced guide channels (derived by the evaluation of the neural network in step 143, based on the initial guide channels produced in rasterization step 140) are used both for model fitting in step 120 and for the application of the denoising model, in step 150. As mentioned above, the upsampling step 130 is eliminated (assuming that the model parameters are produced without downsampling). The low resolution path tracing of step 110 is replaced with full resolution path tracing in the corresponding step 110'.

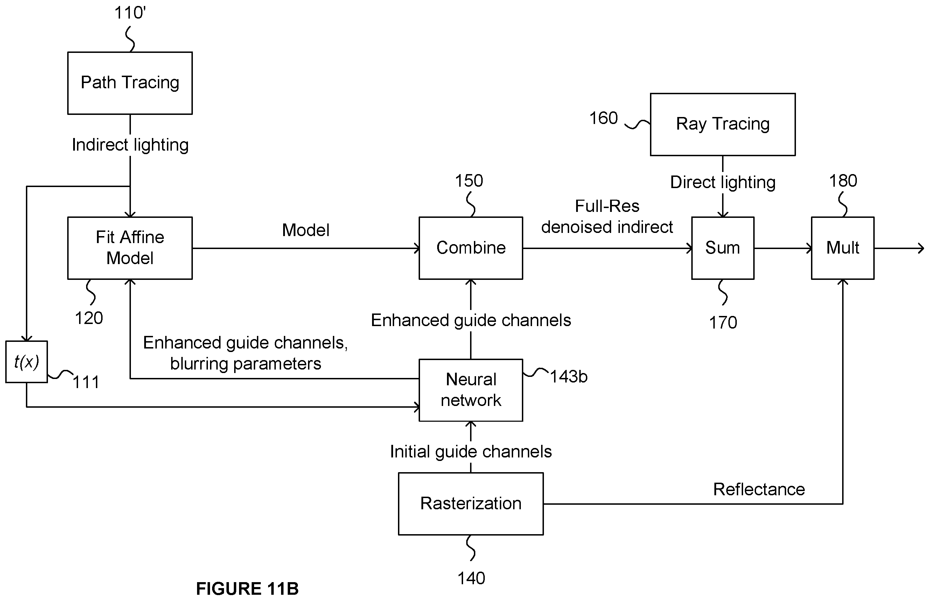

Figure 11B illustrates a variant of the pipeline shown in Figure11A. In the example of Figure 11B, the neural network 143b produces two sets of enhanced guide channels - one set of enhanced guide channels for generating the affine model, and another set of enhanced guide channels for applying the model. Both sets of enhanced guide channels are at the same resolution, and both sets contain the same number of enhanced guide channels. However, the content of the enhanced guide channels may be different. The inventors have found that - surprisingly - the neural network can learn (during training) to produce different guide channels for calculating and applying the denoising model. This can produce better denoising results. Without wishing to be bound by theory, it is believed that this improvement is a result of allowing the denoising model to be more general.

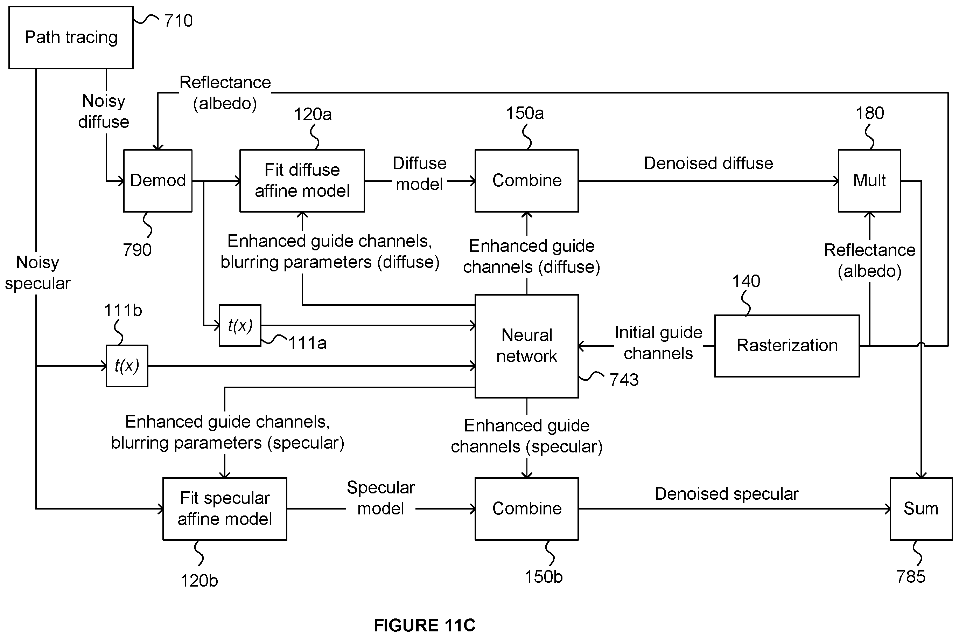

It should be understood that the variant of Figure 3B may be used in the model-fitting steps 120, 720 in each of the pipelines illustrated in Figures 10, 11A, and 11B. It may also be used in the model-fitting steps 120a, 120b in the example of Figure 11C, described later below. Note that when the model parameters are produced at a lower resolution than the noisy image, as in the variant of Figure 3B, a subsequent upsampling step (such as steps 130 and 730) will typically be included.

Alternative lighting models

Although the examples above combined direct and indirect lighting images to provide global illumination, this is not the only possible implementation.

Alternative model fitting

Although the examples above modelled the noisy input image as a linear combination of enhanced guide channels, in an affine model, the scope of the present disclosure is not so limited. Other denoising models may be used, including for example non-linear / higher-order models. One example of such a higher order denoising model would be a quadratic fit. A quadratic denoising model can be implemented by including the square of any of the enhanced guide channels in the guide image.

Alternative initial guide channels

In the examples above, the initial guide channels included a single ambient occlusion guide. This is not essential. It is possible to use other forms of guide channel that characterise the spatial dependency of incident light on global lighting. The initial guide channels used for deriving the enhanced guide channels may include one or more of these guide channels. For instance, each 3D model may be associated with a plurality of maps describing spatial dependency of incident light on (directional) global lighting, each of which is associated with a different dominant direction of illumination, relative to the model. It may be useful to include such diversity in the initial guide channels, because the illumination in the 3D scene may have a particular dominant direction. Object edges/contours that create prominent shadows when illuminated in one direction might be less prominent when illuminated in another direction. By including initial guide channels characterising different illumination directions, the neural network and/or model fitting process can weight more heavily the initial guide channel(s) that best approximate the appearance of the object in the 3D scene, under given illumination conditions.

The method may comprise projecting each of the different occlusion maps to screen space, based on the pose of the object-model, and combining the resulting projected maps for the different object-models that have corresponding dominant illumination directions. For the avoidance of doubt, each combination involves one map per object-model, relating to a particular illumination direction (not multiple maps for the same object-model). Each combination therefore produces an initial guide channel in screen space relating to a different illumination direction.

According to the present disclosure, as already discussed above, the noisy image itself is included among/alongside the initial guide channels. This can improve the denoising results. The inventors have found, in particular, that a noisy indirect lighting image may be useful as an initial guide image. The noisy image contains information about the lighting. It is believed that providing this information to the machine learning model can help the machine learning model (e.g. neural network) to adapt the enhanced guide channels to the lighting conditions. For example, it has been found that it can be useful for reconstructing cast shadows. (Note that the noisy input image is preferably not included as one of the enhanced guide channels, however. To do so would result in approximating the noisy image as a function of itself, which would not usually be beneficial.)

Choice of guide channels

As mentioned previously, initial guide channels of various kinds may be used. In theory, the greater the variety of initial guide channels available, the better the model fitting is likely to be. However, the computational burden of inference using the machine learning model increases with the number of initial guide channels and the number of enhanced guide channels. Likewise, the computational burden of the model fitting and combination stages increases with the number of enhanced guide channels. Therefore, it would be desirable to choose a small number of initial/enhanced guide channels that are most informative for the denoising model. Note that the "best" set of initial guide channels in this sense may be different for 3D scenes of different types, different viewing angles and different lighting conditions. Likewise, the "best" number of enhanced guide channels may vary, e.g. on the scene being denoised and/or the complexity of the geometry and lighting. Nevertheless, the use of the machine learning model (e.g., neural network) helps ensure that, whatever number is chosen, the derived enhanced guide channels contain information that is as useful as possible for supporting the denoising process.

In some cases, the machine learning model (e.g. neural network) could augment the set of initial guide channels with additional guide channels, rather than replacing them. That is, the enhanced guide channels may optionally comprise some or all of the initial guide channels. This may help to reduce the amount of processing required when performing inference using the machine learning model (e.g. neural network), since it may generate fewer "new" enhanced channels to achieve the same denoised output quality.

Denoising diffuse and specular components of illumination separately

For a given light source intensity, the reflectance (that is, the amount of light reflected by a surface) behaves differently for diffuse and specular surfaces. The reflectance of diffuse surfaces, also called "albedo", is the same in every reflected direction, independently of the direction of the incident light coming from the light source or the reflected light towards the position of the viewer. The reflectance of specular surfaces, on the other hand, depends on both the direction of the light coming from the light source and the position of the viewer.

To simulate the physics of real-world materials, diffuse and specular signals can be mixed by adding them together. This can enable more realistic rendering of complex materials. For example, it can recreate the glossy highlights seen in polished or lacquered wood or plastic (as well as the diffuse base colour of these materials).

When rendering, the albedo of the rendered frame can be obtained by sampling the textures of the surfaces intersected by the primary rays. Given this, for our denoiser, it is convenient to either obtain the albedo and the incident illumination (also known as "irradiance") separately, or demodulate the albedo from a diffuse noisy image. This involves dividing (pixel-wise) the diffuse noisy image by the albedo. The resulting demodulated image contains a noisy illumination component - a "noisy irradiance". It can be fed into the denoising algorithm in the same way as before. After denoising, the surface-texture information can be reintroduced by forming the product (pixel-wise) of the denoised irradiance and the albedo. The surface-texture contains high frequency information, which is challenging for the denoiser to reconstruct. Denoising only irradiance can improve the performance of the denoiser. The additional calculations do not add a significant computational burden. However, this approach is only applicable to the diffuse component, because specular reflectance is view-dependent. Consequently, it is proposed to treat the specular and diffuse components as two different signals, to be denoised separately.

Note that no demodulation step was included in the examples described above (illustrated in Figures 1, 2, 10, 11A, and 11B). For those examples, it was assumed that the (noisy) indirect illumination was generated without surface texture information from the outset. The "modulation" step was provided by the multiplication of step 180, which modulated the denoised image by the surface reflectance.

Figure 11C is a simplified block diagram illustrating another example according to the present disclosure, having separate pipelines for diffuse and specular components.

In step 710, the path tracing algorithm produces a noisy diffuse image and a noisy specular image. These can include direct and/or indirect illumination. Note that, unlike the noisy images in the preceding examples, the noisy diffuse output of the path tracing step 710 of Figure 11C *does* include surface texture information. In step 790, the albedo is demodulated from the noisy diffuse image, by dividing the pixel values of the noisy diffuse image by the respective albedo pixel values. (The albedo is rendered in the rasterization operation 140.) The demodulated diffuse image is then denoised.

A tone-mapping operation is applied to the demodulated diffuse image in step 111a, prior to input to the neural network 743. Similarly, a tone-mapping operation is applied to the noisy specular image in step 111b, prior to input to the neural network 743. The neural network 743 also receives as input the initial guide channels produced by the rasterization operation 140. The neural network 743 produces enhanced guide channels (and blurring parameters) for building the linear model for the diffuse image. As separate outputs, it also produces enhanced guide channels (and blurring parameters) for building the linear model for the specular image.

Fitting of the linear model for the diffuse image is performed in step 120a, and the model is applied in step 150a to produce a denoised diffuse image. Fitting of the linear model for the specular image is performed in step 120b, and the model is applied in step 150b to produce a denoised specular image. It should be understood that steps 120a and 120b are substantially identical to step 120 described previously. (And, as noted already above, the variant of Figure 3B may be applied.) Likewise, steps 150a and 150b are substantially identical to step 150 described previously.

In step 180, the albedo is (re)modulated onto (in other words, recombined with) the denoised diffuse image, by pixel-wise multiplication. The result of this multiplication is then combined with the denoised specular image, by pixel-wise summation, in step 785.

In the example of Figure 11C, a single neural network is shown as handling the generation of the guide channels and blurring parameters for both the diffuse and specular pipelines. It should be understood that this is not essential. In other examples, dedicated, separate neural networks could be provided - one to generate the guide channels and blurring parameters for the diffuse model, and another to generate the guide channels and blurring parameters for the specular model. Nevertheless, using a single neural network may be advantageous, in that it can reduce redundant operations.

For simplicity, the example of Figure 11C uses the same resolution throughout the pipeline. Consequently, no upsampling or downsampling is shown. However, it is possible to modify the pipeline to calculate the model parameters (for each model - specular and diffuse) at one resolution, and to apply the model parameters to guide channels generated at a different resolution (in the same manner as the examples of Figures 1 and 10). Optionally, as noted above, the variant of Figure 3B may be applied, in which the outer products are produced in a downsampled form.

Training

To train the machine learning model, a training dataset of noisy images is generated - for example, by a Monte Carlo path tracing method. Noisy images are generated by path tracing with a relatively small number of samples (the number of samples that will be available in the intended implementation). Low noise ground truth images (also referred to as "low noise training images" herein) are generated by path tracing with a relatively large number of samples. The low noise training images act as reference training images. (It is generally advantageous - though not essential - that they are low in noise.) When generated by path tracing with a large number of samples, each reference training image (ground truth image) is a (much) closer approximation to the "perfect" rendered image, which is the image which in theory would be obtained as the number of samples tends towards infinity. The machine learning model is trained to produce enhanced guide images such that the denoising results produced using these guide images are as similar to the ground truth images as possible. The noisy and ground truth images are usually rendered in pairs, such that locations in the noisy image are in 1:1 correspondence with a respective ground truth image.

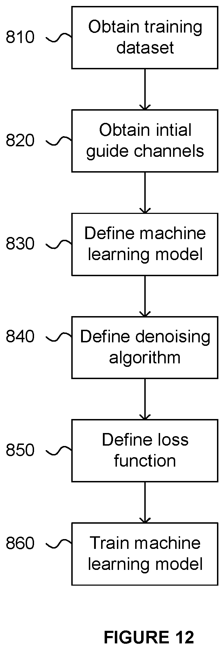

Figure 12 is a flowchart illustrating a method of training a machine learning model, according to an example. This method may be executed in whole or in part by the GPU itself; however, this is not essential. In general, the training method may be executed in whole or in part by one or more processors of a computer. (The one or more processors may be part of the same computer as the GPU, or they may be part of another computer.) In some examples, one or more processors may cooperate with a GPU to perform the method. In the following, for simplicity, we will refer to actions performed by a single processor; however, it should be understood that this is not limiting. The tasks described may be distributed across multiple processors. It should also be understood that the ordering of the operations illustrated in the flowchart is nonlimiting. In other examples, these operations may be performed in a different sequence.

In step 810, the processor obtains a training dataset. The training dataset comprises multiple noisy training images and multiple reference training images. The reference training images provide the ground truth for training the machine learning model. The reference training images are typically low-noise compared with the noisy training images. In the present example, each noisy training image and its respective low-noise reference training image are generated by a path-tracing process functionally similar to block 210. By way of example, the noisy training images may be generated by path tracing with one sample per pixel in the final denoised image; and the reference training images may be generated by path tracing with thousands of samples per pixel.

In step 820, the processor obtains initial guide channels associated with the training dataset. Each set of initial guide channels corresponds to one noisy training image (and the respective reference training image). The initial guide channels are generated in the manner already described above.

Steps 830, 840, and 850 prepare the processor for the training task. In step 830, the processor defines the machine learning model. As explained above, in the present example the machine learning model comprises a neural network based on the U-Net architecture. In step 840, the processor defines the denoising algorithm (in this example, the guided filter described already above). In step 850, the processor defines a loss function, which measures a difference between the denoised images output by the denoising algorithm and the respective (ground truth) reference training images. A loss function should be a differentiable function that, when minimised, increases the visual similarity between the denoised output image and the respective reference training image. An example of a suitable loss function is the mean squared error (MSE) between the denoised output image and the respective reference training image.

The other operations are generally performed before operation 860. In step 860, the processor trains the machine learning model (i.e. the neural network, in this example) using the training dataset, the initial guide channels, the denoising algorithm, and the loss function. The machine learning model is trained to derive, from the initial guide channels and the noisy training images, a set of enhanced guide channels that maximises the performance of the denoising algorithm (by minimising the loss function). The machine learning model is also trained to produce (as a separate output), blurring parameters to control the blurring in the model generation process (for example, the blurring in step 124). In the present example, the training is iterative and is based on a back propagation algorithm. The use of back propagation is possible because all operations in the denoising algorithm (that is, the guided filter) are differentiable. This includes being differentiable with respect to the blurring parameters. The result of the training is a set of parameters for the machine learning model. In the present example these comprise weights and biases for the neural network.

In the examples illustrated in Figures 1, 2, and 10, corresponding enhanced guide channels are generated at two resolutions (low resolution and full resolution, by first and second machine learning models, respectively). As mentioned previously above, the first and second machine learning models may be the same or different. When they are the same, the training trains a single machine learning model (e.g. convolutional neural network) and uses it to generate the low resolution enhanced guide channels and the full resolution enhanced guide channels. When they are different, the training trains the two machine learning models together.

Further optional optimisations of the training procedure are possible. For example, the neural network may be trained to be self-compressing. Methods of training networks to be self-compressing are described in Sz. Cséfalvay and J. Imber, "Self-compressing neural networks" in AAAI 2023.

It should be understood that, although the examples above focus on neural networks, this is not limiting. Other machine learning models are also suitable.

Improved loss function

The inventors have recognised that the choice of loss function used in the training of the machine learning model (e.g. neural network) can affect the quality of the denoising results. In particular, it may be advantageous to modify the loss function when using the machine learning model to infer blurring parameters. As mentioned previously above, there may be a tendency for bright regions of the noisy image to dominate the training process undesirably (because they generate larger numerical differences, when compared with the respective ground truth image). This can lead to a bias in the machine learning model that causes it to over-blur dark regions of the image. One approach to address this problem is the tone-mapping 111 discussed previously above. Another approach is to modify the loss function, so that bright regions do not dominate it. In one example, it is proposed to use a loss function in which pixel errors (between the denoised image and the ground truth image) are normalised by the brightness of the respective pixel in the ground truth image. It is also proposed to use an L1 metric, as the inventors have observed this to be more numerically stable than other alternatives (such as L2). One loss function that fulfils both of these desires is as follows:

$$L = \frac{1}{WH} \sum_{i=1}^{W} \sum_{j=1}^{H} \left| \frac{Y_{i,j} - \widehat{Y_{i,j}}}{Y_{i,j} + \epsilon} \right|$$

Here, $\widehat{Y_{i,j}}$ are the pixel values of the denoised image; $Y_{i,j}$ are the pixel values of the reference (ground truth) image; W and H are the width and height, respectively, of each image; and $\epsilon$ is a small constant, included for numerical stability (to avoid divide-by-zero errors). It was found empirically that $\epsilon = 0.5$ yields good results. When the pixel values of the ground truth image are large (for example, $Y_{i,j} \gg 1$), the error is scaled down accordingly, reducing the importance for the loss estimated for bright pixels. Conversely, when the pixel values are small (for example, $Y_{i,j} < 1$), the opposite happens, thereby boosting the priority given to the portion of the loss coming from dark pixels.

Temporal filtering

Noise in the denoised output images may be further reduced, and temporal stability may be enhanced, by the use of temporal filtering. This can be implemented in various ways. A first option involves temporal filtering of the noisy (input) images. This can reduce the amount of noise present at the input to the denoising and rendering pipeline, resulting in reduced noise and improved temporal stability at the output. A second option involves temporal filtering of the moment tensors computed by the method - that is, temporal filtering of the output of step 124, 124a, or 324. A third option involves temporal filtering of the denoised output images - that is, temporal filtering of the output of step 180.

In each case, temporal filtering is performed over a plurality of frames of a sequence. It may be advantageous to compensate for the motion of points across frames, for example by use of rendered motion vector images. To reduce cost, temporal filtering may be performed at a low resolution, making the first and second options described above more attractive. The filtering may be based on a moving average calculation. The moving average may give greater weight to samples/guide channels for more recent frames. An exponentially weighted moving average has been found to produce good results, for example. Other options include applying motion compensation to one or more previous denoised output frame(s), and using these one or more frames as one or more additional initial guide channels.

System

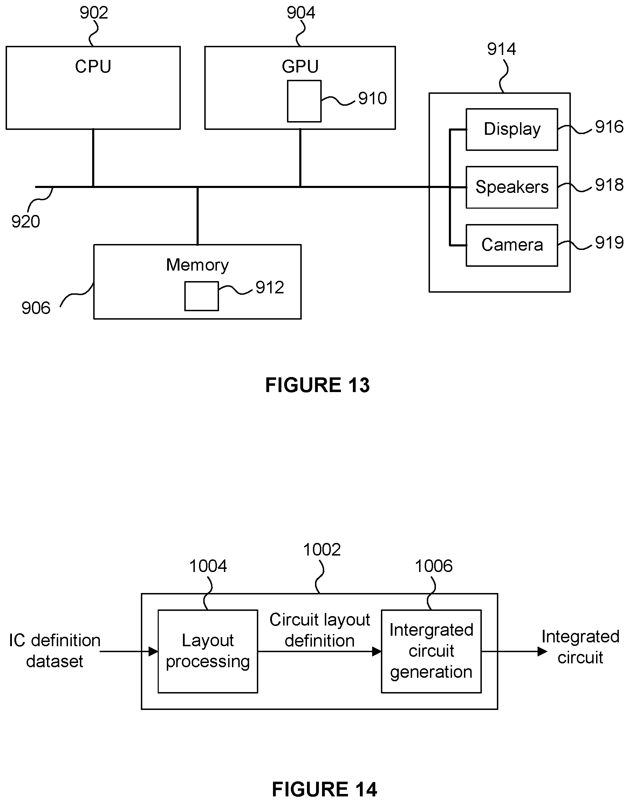

Figure 13 shows a graphics processing system in which the graphics processing units described herein may be implemented. The computer system comprises a CPU 902, a GPU 904, a memory 906 and other devices 914, such as a display 916, speakers 918 and a camera 919. A processing block 910 (corresponding to processing blocks 210-280) is implemented on the GPU 904. In other examples, the processing block 910 may be implemented on the CPU 902. The components of the computer system can communicate with each other via a communications bus 920. A store 912 (corresponding to store 112) is implemented as part of the memory 906.

While Figure 13 illustrates one implementation of a graphics processing system, it will be understood that a similar block diagram could be drawn for an artificial intelligence accelerator system - for example, by replacing either the CPU 902 or the GPU 904 with a Neural Network Accelerator (NNA), or by adding the NNA as an additional unit. In such cases, the processing block 910 can be implemented in the NNA.

The GPU of Figure 2 and the methods/pipelines of Figures 1, 10, and 11 are shown as comprising a number of functional blocks. This is schematic only and is not intended to define a strict division between different logic elements of such entities. Each functional block may be provided in any suitable manner. It is to be understood that intermediate values described herein as being formed by a GPU need not be physically generated by the GPU at any point and may merely represent logical values which conveniently describe the processing performed by the GPU between its input and output.

The GPUs and graphics processing systems described herein may be embodied in hardware on an integrated circuit. The GPUs and graphics processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java® or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing system configured to perform any of the methods described herein, or to manufacture a graphics processing system comprising any apparatus described herein. An integrated circuit definition dataset may be, for example, an integrated circuit description.

Therefore, there may be provided a method of manufacturing, at an integrated circuit manufacturing system, a graphics processing system as described herein. Furthermore, there may be provided an integrated circuit definition dataset that, when processed in an integrated circuit manufacturing system, causes the method of manufacturing a graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing system will now be described with respect to Figure 14.

Figure 14 shows an example of an integrated circuit (IC) manufacturing system 1002 which is configured to manufacture a graphics processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a graphics processing system as described in any of the examples herein), process the IC definition dataset, and generate an IC according to the IC definition dataset (e.g. which embodies a graphics processing system as described in any of the examples herein). The processing of the IC definition dataset configures the IC manufacturing system 1002 to manufacture an integrated circuit embodying a graphics processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in

**EP 4 641 484 A1**

the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 14 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 14, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

**1.** A method of rendering an image of a 3-D scene, the method comprising:

rendering (110) a noisy image;
obtaining (112) one or more initial guide channels;
deriving one or more enhanced guide channels from the initial guide channels and the noisy image, using a first machine learning model;
for each of a plurality of local neighbourhoods, calculating (120) the parameters of a denoising model that approximates the noisy image as a function of the one or more enhanced guide channels; and
applying (130, 150) the calculated parameters to the one or more enhanced guide channels, to produce a denoised image.

2. A method of rendering an image of a 3-D scene, the method comprising:

   rendering (110) a low-resolution noisy image;
   obtaining (112) one or more low-resolution initial guide channels and obtaining (140) one or more corresponding full-resolution initial guide channels;
   deriving (113) one or more low-resolution enhanced guide channels from the low-resolution initial guide channels and the low-resolution noisy image, using a first machine learning model;
   deriving (143) one or more full-resolution enhanced guide channels from the full-resolution initial guide channels, using a second machine learning model;
   for each of a plurality of local neighbourhoods, calculating (120) the parameters of a denoising model that approximates the low-resolution noisy image as a function of the one or more low-resolution enhanced guide channels; and
   applying (130, 150) the calculated parameters to the one or more full-resolution enhanced guide channels, to produce a denoised image.

3. The method of any one of the preceding claims, further comprising, for each of the plurality of local neighbourhoods, inferring (113), using a machine learning model, one or more blurring parameters for the neighbourhood, wherein calculating the parameters of the denoising model comprises:

   calculating (122; 122a; 122b) a first outer product ($x^Tx$) between pixels (x) in the one or more enhanced guide channels and themselves;
   calculating (122; 122a; 122b) a second outer product ($x^Ty$) between pixels (x) in the one or more enhanced guide channels and the corresponding pixels (y) in the noisy image;
   blurring (124, 124a) the first outer products to calculate a first moment matrix ($X^TX$) for each local neighbourhood wherein said blurring is controlled by the one or more blurring parameters for the neighbourhood;
   blurring (124, 124a) the second outer products to calculate a second moment matrix ($X^TY$) for each local neighbourhood wherein said blurring is controlled by the one or more blurring parameters for the neighbourhood; and
   calculating (126) the parameters (A) of the denoising model for each local neighbourhood, comprising calculating an inverse matrix of the first moment matrix, and calculating a product of the inverse matrix and the second moment matrix.

4. The method of claim 3, wherein the one or more blurring parameters comprise two blurring parameters and the blurring comprises separable filtering in two dimensions.

5. The method of any one of the preceding claims, further comprising applying a tone-mapping function (111) to the noisy image to compress its dynamic range, before deriving the one or more enhanced guide channels from the initial guide channels and the noisy image.

6. The method of any one of the preceding claims, wherein the noisy image is a noisy diffuse image containing illumination but not surface texture in the scene, and the denoised image is a denoised diffuse image, the method further comprising:

   rendering (710) a noisy specular image;
   obtaining one or more specular guide channels;
   for each of a plurality of local neighbourhoods, calculating (120b) parameters of a specular denoising model that approximates the noisy specular image as a function of the one or more specular guide channels;
   applying (150b) the calculated parameters of the specular denoising model to the one or more specular guide channels, to produce a denoised specular image; and
   combining (785) the denoised specular image with the denoised diffuse image to produce a combined denoised image.

7. The method of claim 6, wherein obtaining the specular guide channels comprises deriving (743) the specular guide channels from the initial guide channels and optionally the noisy image, using the first machine learning model.

8. The method of any one of claims 1 to 5, wherein the noisy image is a noisy diffuse image containing illumination but not surface texture in the scene, and the denoised image is a denoised diffuse image, the method further comprising:

rendering a low resolution noisy specular image;

obtaining one or more low-resolution specular guide channels and obtaining one or more corresponding full-resolution specular guide channels;

for each of a plurality of local neighbourhoods, calculating parameters of a specular denoising model that approximates the low-resolution noisy specular image as a function of the one or more low-resolution specular guide channels;

applying the calculated parameters of the specular denoising model to the one or more full-resolution specular guide channels, to produce a denoised specular image; and

combining the denoised specular image with the denoised diffuse image to produce a combined denoised image.

9. The method of claim 8, wherein obtaining the low-resolution specular guide channels comprises deriving the low-resolution specular guide channels from the low-resolution initial guide channels and optionally the noisy image, using the first machine learning model, and

wherein obtaining the full-resolution specular guide channels comprises deriving the full-resolution specular guide channels from the full-resolution initial guide channels and optionally the noisy image, using the second machine learning model.

10. A method of training a machine learning model to derive one or more enhanced guide channels from one or more initial guide channels, wherein the enhanced guide channels are suitable for use in a method of rendering an image of a 3D scene, the method comprising:

obtaining a training dataset comprising a plurality of noisy training images and a plurality of reference training images, each reference training image corresponding to a respective noisy training image;

obtaining, for each noisy training image, one or more initial guide channels;

defining a machine learning model that derives one or more enhanced guide channels from the one or more initial guide channels and the noisy image;

defining a denoising algorithm that produces a denoised image from a respective noisy training image;

defining a loss function, based on a comparison between the denoised image and the respective reference training image; and

training the machine learning model to derive the one or more enhanced guide channels from the one or more initial guide channels and the noisy image such that the loss function is minimised.

11. The method of claim 10, wherein the loss function is based on comparing pixels of the denoised image with respective pixels of the reference training image, to produce pixelwise error values,

wherein the contribution of each error value to the loss function is normalised by the brightness of the respective pixel in the reference training image.

12. The method of claim 10 or claim 11, wherein the denoising algorithm comprises a denoising model that approximates the noisy image as a function of the one or more enhanced guide channels,

wherein calculating parameters of the denoising model comprises:

calculating (122; 122a; 122b) a first outer product ($x^T x$) between each pixel (x) in the one or more enhanced guide channels and itself;

calculating (122; 122a; 122b) a second outer product ($x^T y$) between each pixel (x) in the one or more enhanced guide channels and the corresponding pixel (y) in the noisy image;

blurring (124, 124a) the first outer products to calculate a first moment matrix ($X^T X$) for each local neighbourhood wherein said blurring is controlled by one or more blurring parameters for the neighbourhood;

blurring (124, 124a) the second outer products to calculate a second moment matrix ($X^T Y$) for each local neighbourhood wherein said blurring is controlled by one or more blurring parameters for the neighbourhood; and

calculating (126) the parameters (A) of the denoising model for each local neighbourhood, comprising calculating an inverse matrix of the first moment matrix, and calculating a product of the inverse matrix and the second moment matrix,

wherein the method further comprises training the machine learning model to infer the blurring parameters for each neighbourhood.

13. A graphics processing unit configured to render an image of a 3-D scene, the graphics processing unit comprising:

a first rendering block (210), configured to render (110') a noisy image;
a second rendering block (240), configured to render (140) one or more initial guide channels;
a first inference block, configured to derive one or more enhanced guide channels from the initial guide channels and the noisy image, using a first machine learning model;
a model fitting block (220), configured to, for each of a plurality of local neighbourhoods, calculate (120) the parameters of a denoising model that approximates the noisy image as a function of the one or more enhanced guide channels; and
a model application block (250), configured to apply (150) the calculated parameters to the one or more enhanced guide channels, to produce a denoised image.

14. A graphics processing unit configured to render an image of a 3-D scene, the graphics processing unit comprising:

a first rendering block (210), configured to render (110) a low-resolution noisy image;
a second rendering block (240), configured to render (112) one or more low-resolution initial guide channels;
a third rendering block (240), configured to render (140) one or more full-resolution initial guide channels, each full-resolution initial guide channel corresponding to a respective low-resolution initial guide channel;
a first inference block, configured to derive one or more low-resolution enhanced guide channels from the low-resolution initial guide channels and the low-resolution noisy image, using a first machine learning model;
a second inference block, configured to derive one or more full-resolution enhanced guide channels from the full-resolution initial guide channels, using a second machine learning model;
a model fitting block (220), configured to, for each of a plurality of local neighbourhoods, calculate (120) the parameters of a denoising model that approximates the noisy low-resolution image as a function of the one or more low-resolution enhanced guide channels; and
a model application block (230, 250), configured to apply (130, 150) the calculated parameters to the one or more full-resolution enhanced guide channels, to produce a full-resolution denoised image.

15. Computer readable code configured to cause a method according to any one of claims 1 to 12 to be performed when the code is run.

**FIGURE 1**

FIGURE 2

FIGURE 3A

FIGURE 3B

EP 4 641 484 A1

110 — Low-Res Path Tracing → Indirect lighting

113 — Neural network → Enhanced guide channels

115 Divide into non-overlapping tiles

Indirect lighting →

Enhanced guide channels →

122b Compute outer products

**FIGURE 4**

Indirect lighting —————→

Enhanced guide channels —→

122 Compute outer products

$x^Tx$

$x^Ty$

125 Divide into overlapping tiles

Blurring parameters ——————————→

124a Blur

**FIGURE 5**

**FIGURE 6A**

**FIGURE 6B**

FIGURE 6C

EP 4 641 484 A1

FIGURE 7

Input to next layer
of U-Net decoder

Output from
previous layer of → *h* →
U-Net decoder

502

Convolutional layer

504

σ(x) * a

→ *R*

**FIGURE 8**

EP 4 641 484 A1

612

Non-linearity

614

Uniform
Quantisation

616

Conversion to
low-bitdepth
integer

622

Conversion to
float

624

Inverse Non-
linearity

Encoder

Decoder

610

620

**FIGURE 9**

Low-Res Ray Tracing — 760

Low-Res Path Tracing — 110

Low-Res Rasterization — 112

Direct lighting

Indirect lighting

Initial guide channels

$t(x)$ — 111

Sum — 770

Neural network — 113

Global illumination

Enhanced guide channels

Create Affine Model — 720

Blurring parameters

Model

Upsample — 730

Combine — 750

Full-Res denoised

Mult — 180

Neural network — 143

Initial guide channels

Enhanced guide channels

Full-Res Rasterization — 140

Reflectance

FIGURE 10

41

FIGURE 11A

**FIGURE 11B**

FIGURE 11C

EP 4 641 484 A1

810 ⟿ | Obtain training dataset |

↓

820 ⟿ | Obtain intial guide channels |

↓

830 ⟿ | Define machine learning model |

↓

840 ⟿ | Define denoising algorithm |

↓

850 ⟿ | Define loss function |

↓

860 ⟿ | Train machine learning model |

**FIGURE 12**

902

904

914

CPU

GPU

910

Display ~916

Speakers ~918

Camera ~919

920

Memory

912

906

**FIGURE 13**

1004

1002

1006

IC definition dataset

Layout processing

Circuit layout definition

Intergrated circuit generation

Integrated circuit

**FIGURE 14**

Europäisches
Patentamt

European
Patent Office

Office européen
des brevets

# EUROPEAN SEARCH REPORT

**Application Number**

EP 25 17 2273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Meng Xiaoxu ET AL: "Real-time Monte Carlo Denoising with the Neural Bilateral Grid", , 30 June 2020 (2020-06-30), pages 1-12, XP093219432, Retrieved from the Internet: URL:https://quan-zheng.github.io/publication/DenoisingNBG-paper.pdf [retrieved on 2024-10-30] | 1,2, 5-11, 13-15 | INV. G06T5/60 G06T5/70 G06T15/06 |
| A | * sections 2-5; figures 1,2 * | 3,4,12 | |
| A | MATIAS KOSKELA ET AL: "Blockwise Multi-Order Feature Regression for Real-Time Path-Tracing Reconstruction", ACM TRANSACTIONS ON GRAPHICS, ACM, NY, US, vol. 38, no. 5, 17 June 2019 (2019-06-17), pages 1-14, XP058437951, ISSN: 0730-0301, DOI: 10.1145/3269978 * sections 3-6; figure 13 * | 1-15 | |
| A | QIQI HOU ET AL: "Fast Monte Carlo Rendering via Multi-Resolution Sampling", ARXIV.ORG, CORNELL UNIVERSITY LIBRARY, 201 OLIN LIBRARY CORNELL UNIVERSITY ITHACA, NY 14853, 24 June 2021 (2021-06-24), XP081994795, * section 3.2 * | 1-15 | **TECHNICAL FIELDS SEARCHED (IPC)** G06T |
| A | KAIMING HE ET AL: "Guided Image Filtering", IEEE TRANSACTIONS ON PATTERN ANALYSIS AND MACHINE INTELLIGENCE, vol. 35, no. 6, 1 June 2013 (2013-06-01), pages 1397-1409, XP055127406, ISSN: 0162-8828, DOI: 10.1109/TPAMI.2012.213 * sections 3.2 to 3.6 * | 1-15 | |

The present search report has been drawn up for all claims

| Place of search | Date of completion of the search | Examiner |
|---|---|---|
| The Hague | 6 May 2025 | Atmatzidis, Lazaros |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2405827 A

- GB 2504419 A

**Non-patent literature cited in the description**

- Guided Image Filtering. **KAIMING HE** ; **JIAN SUN** ; **XIAOOU TANG**. Computer Vision - ECCV 2010. Lecture Notes in Computer Science. Springer, vol. 6311

- **SZ. CSÉFALVAY** ; **J. IMBER**. Self-compressing neural networks. *AAAI*, 2023